# EUROPEAN PATENT APPLICATION

(11) **EP 4 231 538 A1**
(43) Date of publication of application: **23.08.2023**
(21) Application number: 21896894.9
(22) Date of filing: 19.11.2021
(51) Int. Cl.: H04B 7/0408

(54) **COMMUNICATION METHOD, APPARATUS AND SYSTEM**

(30) Priority: 27.11.2020 CN 202011360990
(71) Applicant: Huawei Technologies Co., Ltd., Shenzhen, Guangdong 518129 (CN)
(72) Inventor: HUANG, Huang, Shenzhen, Guangdong 518129 (CN)
(74) Representative: Gill Jennings & Every LLP
(86) International application number: PCT/CN2021/131809
(87) International publication number: WO 2022/111393

(57) **Abstract**

This application provides a communication method, an apparatus, and a system. In the method, a network device sends N first signals through a first beam, so that a repeater forwards the N first signals through a plurality of second beams. Therefore, a first terminal device measures quality of the N first signals forwarded by the repeater, and finally sends first indication information to feed back index information of X first signals. Then, the network device communicates with the terminal device through a second beam that is in X second beams corresponding to the index information of the X first signals and that is used by the repeater to align with the first terminal device, so that the repeater relays communication between the network device and the terminal device through a narrow beam with a higher gain. This increases a communication distance between a repeater and a terminal device, and improves downlink signal received quality of the terminal device and uplink signal received quality of a network device.

## Description

This application claims priority to Chinese Patent Application No. 202011360990.1, filed with the China National Intellectual Property Administration on November 27, 2020 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, an apparatus, and a system.

### BACKGROUND

A main problem of high-frequency communication is that signal energy sharply decreases as a transmission distance increases, and this results in a short signal transmission distance. To overcome this problem, a beamforming technology is used in high-frequency communication to concentrate energy of transmitted signals in a small angle range, so that a beam is formed to increase a transmission distance.

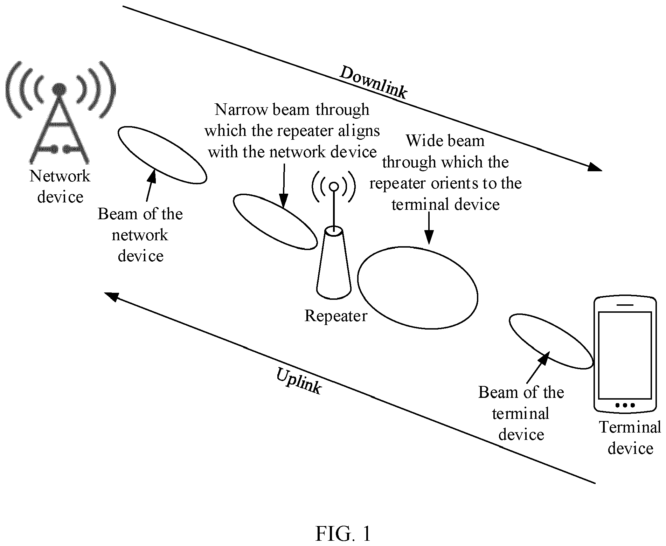

Currently, to further increase a transmission distance, a repeater is used in wireless communication to amplify and forward a signal received by the repeater. As shown in FIG. 1, a repeater first receives a broadcast signal of a network device through beam scanning, to determine a narrow beam (which includes a downlink receive beam and an uplink transmit beam) for communication between the repeater and the network device, and implements time synchronization with the network device based on the broadcast signal, to obtain uplink and downlink transmission time information. Then, in a downlink transmission slot, the repeater receives, through the downlink receive beam, information sent by the network device, amplifies the information, and forwards the information to a terminal device through a wide beam oriented to the terminal device. In an uplink transmission slot, the repeater receives, through a wide beam oriented to a terminal device, information sent by the terminal device, amplifies the information, and forwards the information to the network device through the uplink transmit beam.

In the foregoing solution, the repeater performs receiving and sending through the wide beam oriented to the terminal device. This may result in a small beam gain and affect a communication distance between a repeater and a terminal device.

### SUMMARY

This application provides a communication method, an apparatus, and a system, to increase a transmission distance.

To achieve the foregoing objective, the following technical solutions are used in embodiments of this application.

According to a first aspect, a communication method is provided. In the method, a network device sends N first signals through a first beam, and receives first indication information from a first terminal device through a repeater, where the first indication information includes index information of X first signals fed back by the first terminal device, the index information of the X first signals corresponds to X second beams, and the second beam is a beam of the repeater. Then, the network device communicates with the first terminal device through one of the X second beams, where the first signal is a broadcast signal or a reference signal, N is a positive integer greater than 1, and X is a positive integer less than or equal to N.

Based on this solution, the network device sends the N first signals through the first beam, and receives the index information of the X first signals fed back by the first terminal device, to communicate with the first terminal device through the one of the X second beams, of the repeater, that correspond to the index information of the X first signals. In other words, the network device can communicate with the terminal device through a narrow beam with a higher gain of the repeater, to increase a communication distance between a repeater and a terminal device, improve downlink signal received quality of the terminal device and uplink signal received quality of a network device, and improve an overall transmission distance and communication quality of a system.

In some possible designs, the communication method further includes: The network device sends second indication information to the repeater, where the second indication information indicates the repeater to forward the first signal in a multi-beam forwarding manner. Based on this solution, the repeater can be enabled to forward the N first signals through a plurality of second beams.

In some possible designs, the communication method further includes: The network device receives third indication information from the repeater, where the third indication information indicates the first beam, and the first beam is a beam for communication between the network device and the repeater. Based on this solution, the network device can be enabled to learn of a beam used by the network device to align with the repeater, or learn of a beam used by the network device to provide a service for the repeater.

In some possible designs, the communication method further includes: The network device sends fourth indication information to the repeater, where the fourth indication information indicates a quantity N of repetitions of the first beam. In this case, that a network device sends N first signals through a first beam includes: The network device sends the N first signals for N times through the first beam.

In some possible designs, when the first signal is a broadcast signal, the N first signals belong to a first signal group, and the fourth indication information includes a quantity of repetitions of a beam corresponding to the first signal group; the fourth indication information includes the quantity N of repetitions of the first beam; or the fourth indication information includes a quantity (N-Y) of repetitions of the first beam, and Y is a quantity of times that the first signal has been sent.

In some possible designs, the communication method further includes: The network device receives a total quantity M of beams that are supported by the repeater and that are from the repeater, where M is a positive integer greater than or equal to X. Based on this solution, the network device learns that the network device can be enabled to perform processing based on the total quantity M of beams supported by the repeater, for example, determine the quantity N of times of the first beam.

In some possible designs, that the network device communicates with the first terminal device through one of the X second beams includes: The network device communicates with the first terminal device within a time unit corresponding to the one of the X second beams through the second beam. Based on this solution, the network device communicates with the first terminal device within the time unit corresponding to the one of the X second beams through the second beam, so that quality of communication between the network device and the first terminal device can be ensured.

In some possible designs, the communication method further includes: The network device sends fifth indication information to the repeater, where the fifth indication information indicates the one of the X second beams. Based on this solution, the repeater can be indicated to relay communication between the network device and the first terminal device through the one of the X second beams.

In some possible designs, the communication method further includes: The network device determines a state of the repeater in one or more of the following manners, where the state of the repeater includes a working state or a non-working state: the network device determines the state of the repeater based on planned working duration of the repeater; the network device determines the state of the repeater based on random access initiated by the repeater; or the network device determines the state of the repeater based on an uplink signal from the repeater. Based on this solution, the repeater feeds back the state of the repeater to the network device, so that the network device obtains the state of the repeater, and determines a data transmission manner based on the state of the repeater.

In some possible designs, the communication method further includes: The network device receives request information from the repeater, where the request information requests to hand over to the non-working state. Based on this solution, after receiving the request information from the repeater, the network device may determine, based on a service condition of the network device, whether to allow the repeater to hand over to the non-working state. For example, when there is no data transmission requirement between the network device and a terminal device in coverage of the repeater, the network device may determine to allow the repeater to hand over to the non-working state; or when there is no data transmission requirement between the network device and a terminal device in coverage of the repeater, the network device may determine not to allow the repeater to hand over to the non-working state. Then, the network device may send response information to the repeater based on a determining result of the network device, to indicate that the repeater is allowed to hand over to the non-working state, or indicate that the repeater is not allowed to hand over to the non-working state; or the network device does not send response information of the request information to the repeater, to indicate that the repeater is allowed to hand over to the non-working state. In other words, the network device can determine, based on the service condition of the network device, whether to allow the repeater to hand over to the non-working state, to reduce a possibility that a service of the network device is interrupted, and improve service continuity.

In some possible designs, the X first signals fed back by the first terminal device include: X first signals with best quality in the N first signals; X first signals, in the N first signals, whose quality is greater than or equal to a first threshold; or X first signals, in the N first signals, whose quality is greater than or equal to average quality of the N first signals. Based on this solution, the first terminal device feeds back X first signals with good quality, and the network device finally communicates with the first terminal device through a second beam corresponding to one of the X first signals, to improve quality of communication between the network device and the first terminal device.

In some possible designs, X is greater than or equal to 2; and after the X first signals are sorted by quality, a quality difference between at least two adjacent first signals is greater than or equal to a second threshold.

According to a second aspect, a communication method is provided. In the method, a first terminal device measures quality of N first signals forwarded by a repeater from a network device, and sends first indication information to the network device, where the first indication information includes index information of X first signals, the index information of the X first signals corresponds to X second beams, and the second beam is a beam of the repeater. Then, the first terminal device communicates with the network device through one of the X second beams, where the first signal is a broadcast signal or a reference signal, N is a positive integer greater than 1, and X is a positive integer less than or equal to N.

Based on this solution, the first terminal device measures quality of a plurality of first signals forwarded by the repeater from the network device, to feed back the index information of the X first signals, where the index information of the X first signals corresponds to the X second beams; and finally communicates with the network device through the one of the X second beams. In other words, the first terminal device can communicate with the network device through a narrow beam with a higher gain of the repeater, to increase a communication distance between a repeater and a terminal device, improve downlink signal received quality of the terminal device and uplink signal received quality of a network device, and improve an overall transmission distance and communication quality of a system.

In some possible designs, that the first terminal device communicates with the network device through one of the X second beams includes: The first terminal device communicates with the network device within a time unit corresponding to the one of the X second beams through the second beam.

In some possible designs, the X first signals include: X first signals with best quality in the N first signals; X first signals, in the N first signals, whose quality is greater than or equal to a first threshold; or X first signals, in the N first signals, whose quality is greater than or equal to average quality of the N first signals.

In some possible designs, X is greater than or equal to 2; and after the X first signals are sorted by quality, a quality difference between at least two adjacent first signals is greater than or equal to a second threshold.

In some possible designs, that the first terminal device sends first indication information includes: The first terminal device sends the first indication information to the network device when a difference between maximum quality and minimum quality in the quality of the N first signals is greater than or equal to a third threshold.

For technical effects brought by any possible implementation of the second aspect, refer to corresponding descriptions of the first aspect. Details are not described herein again.

According to a third aspect, a communication method is provided. In the method, a repeater receives N first signals from a network device, and forwards the N first signals through K second beams. Then, the repeater relays communication between the network device and a first terminal device through one of X second beams, where the X second beams correspond to index information of X first signals fed back by the first terminal device, the first signal is a broadcast signal or a reference signal, N and K are positive integers greater than 1, and X is a positive integer less than or equal to N.

Based on this solution, after receiving a plurality of first signals sent by the network device, the repeater forwards the N first signals through the plurality of second beams. Therefore, in comparison with a solution in a conventional technology in which the repeater performs forwarding through one wide beam, in the solution in this application, the repeater forwards the plurality of first signals through a plurality of narrow beams, and the repeater finally relays communication between the network device and the terminal device through a narrow beam with a higher gain. This increases a communication distance between a repeater and a terminal device, and improves an overall transmission distance and communication quality of a system.

In some possible designs, the communication method further includes: The repeater receives second indication information from the network device, where the second indication information indicates the repeater to forward the first signal in a multi-beam forwarding manner.

In some possible designs, the communication method further includes: The repeater sends third indication information to the network device, where the third indication information indicates a first beam, and the first beam is a beam for communication between the network device and the repeater.

In some possible designs, the communication method further includes: The repeater receives fourth indication information from the network device, where the fourth indication information indicates a quantity N of repetitions of the first beam.

In some possible designs, when the first signal is a broadcast signal, the N first signals belong to a first signal group, and the fourth indication information includes a quantity of repetitions of a beam corresponding to the first signal group; the fourth indication information includes the quantity N of repetitions of the first beam; or the fourth indication information includes a quantity (N-Y) of repetitions of the first beam, and Y is a quantity of times that the first signal has been sent.

In some possible designs, the communication method further includes: The repeater sends one or more of the following items to the network device: a total quantity M of beams supported by the repeater, a forwarding manner of the repeater, and controllable information of a beam of the repeater, where the forwarding manner of the repeater is multi-beam forwarding, and the controllable information of the beam of the repeater indicates whether the repeater supports adjustment of the beam of the repeater according to an indication of the network device.

In some possible designs, the communication method further includes: The repeater receives fifth indication information from the network device, where the fifth indication information indicates the one of the X second beams.

In some possible designs, the communication method further includes: The repeater feeds back a state of the repeater to the network device in one or more of the following manners, where the state of the repeater includes a working state or a non-working state: the repeater sends planned working duration of the repeater to the network device; the repeater initiates random access to the network device; or the repeater sends an uplink signal to the network device.

In some possible designs, the communication method further includes: The repeater sends request information to the network device, where the request information requests to hand over to the non-working state.

For technical effects brought by any possible implementation of the third aspect, refer to corresponding descriptions of the first aspect. Details are not described herein again.

According to a fourth aspect, a communication apparatus is provided, to implement the foregoing methods. The communication apparatus may be the network device in the first aspect, or an apparatus including the network device, or an apparatus included in the network device, for example, a chip. Alternatively, the communication apparatus may be the first terminal device in the second aspect, or an apparatus including the first terminal device, or an apparatus included in the first terminal device. Alternatively, the communication apparatus may be the repeater in the third aspect, or an apparatus including the repeater, or an apparatus included in the repeater. The communication apparatus includes a corresponding module, unit, or means (means) for implementing the foregoing methods. The module, the unit, or the means may be implemented by hardware or software, or implemented by hardware by executing corresponding software. The hardware or the software includes one or more modules or units corresponding to the foregoing function.

According to a fifth aspect, a communication apparatus is provided. The communication apparatus includes a processor and a memory. The memory is configured to store computer instructions; and when the processor executes the instructions, the communication apparatus is enabled to perform the method according to any one of the foregoing aspects. The communication apparatus may be the network device in the first aspect, or an apparatus including the network device, or an apparatus included in the network device, for example, a chip. Alternatively, the communication apparatus may be the first terminal device in the second aspect, or an apparatus including the first terminal device, or an apparatus included in the first terminal device. Alternatively, the communication apparatus may be the repeater in the third aspect, or an apparatus including the repeater, or an apparatus included in the repeater.

According to a sixth aspect, a communication apparatus is provided. The communication apparatus includes a processor and an interface circuit. The interface circuit is configured to communicate with a module other than the communication apparatus. The processor is configured to run a computer program or instructions to perform the method according to any one of the foregoing aspects. Alternatively, the interface circuit may be a code/data read/write interface circuit, and the interface circuit is configured to: receive computer-executable instructions (where the computer-executable instructions are stored in a memory, and may be directly read from the memory, or may be read through another component), and transmit the computer-executable instructions to the processor, so that the processor runs a computer-executable program or the computer-executable instructions to perform the method according to any one of the foregoing aspects. The communication apparatus may be the network device in the first aspect, or an apparatus including the network device, or an apparatus included in the network device, for example, a chip. Alternatively, the communication apparatus may be the first terminal device in the second aspect, or an apparatus including the first terminal device, or an apparatus included in the first terminal device. Alternatively, the communication apparatus may be the repeater in the third aspect, or an apparatus including the repeater, or an apparatus included in the repeater.

In some possible designs, the communication apparatus may be a chip or a chip system.

According to a seventh aspect, a communication apparatus is provided. The communication apparatus includes a processor. The processor is configured to: be coupled to a memory; and after reading instructions in the memory, execute the instructions, so that the communication apparatus performs the method according to any one of the foregoing aspects. The communication apparatus may be the network device in the first aspect, or an apparatus including the network device, or an apparatus included in the network device, for example, a chip. Alternatively, the communication apparatus may be the first terminal device in the second aspect, or an apparatus including the first terminal device, or an apparatus included in the first terminal device. Alternatively, the communication apparatus may be the repeater in the third aspect, or an apparatus including the repeater, or an apparatus included in the repeater.

According to an eighth aspect, a computer-readable storage medium is provided. The computer-readable storage medium stores instructions; and when the instructions are run on a communication apparatus, the communication apparatus is enabled to perform the method according to any one of the foregoing aspects. The communication apparatus may be the network device in the first aspect, or an apparatus including the network device, or an apparatus included in the network device, for example, a chip. Alternatively, the communication apparatus may be the first terminal device in the second aspect, or an apparatus including the first terminal device, or an apparatus included in the first terminal device. Alternatively, the communication apparatus may be the repeater in the third aspect, or an apparatus including the repeater, or an apparatus included in the repeater.

According to a ninth aspect, a computer program product including instructions is provided. When the computer program product runs on a communication apparatus, the communication apparatus is enabled to perform the method according to any one of the foregoing aspects. The communication apparatus may be the network device in the first aspect, or an apparatus including the network device, or an apparatus included in the network device, for example, a chip. Alternatively, the communication apparatus may be the first terminal device in the second aspect, or an apparatus including the first terminal device, or an apparatus included in the first terminal device. Alternatively, the communication apparatus may be the repeater in the third aspect, or an apparatus including the repeater, or an apparatus included in the repeater.

According to a tenth aspect, a communication apparatus (where for example, the communication apparatus may be a chip or a chip system) is provided. The communication apparatus includes a processor, configured to implement the function according to any one of the foregoing aspects. In a possible design, the communication apparatus further includes a memory. The memory is configured to store necessary program instructions and data. When being a chip system, the communication apparatus may include a chip, or may include a chip and another discrete component.

For technical effects brought by any design manner of the fourth aspect to the tenth aspect, refer to technical effects brought by different design manners of the first aspect, the second aspect, or the third aspect. Details are not described herein again.

According to an eleventh aspect, a communication system is provided. The communication system includes the network device, the repeater, and the first terminal device described in the foregoing aspects.

### BRIEF DESCRIPTION OF DRAWINGS

FIG. 1 is a schematic diagram of a communication scenario in which a repeater participates in communication according to an embodiment of this application;
FIG. 2 is a schematic diagram of a structure of an SSB according to an embodiment of this application;
FIG. 3 is a schematic diagram of beam matching according to an embodiment of this application;
FIG. 4 is a schematic diagram of an architecture of a communication system according to an embodiment of this application;
FIG. 5(a) to FIG. 5(c) are schematic diagrams of structures of a network device, a first terminal device, and a repeater according to an embodiment of this application;
FIG. 6 is a schematic flowchart 1 of a communication method according to an embodiment of this application;
FIG. 7 is a schematic flowchart 2 of a communication method according to an embodiment of this application;
FIG. 8 is a schematic flowchart 3 of a communication method according to an embodiment of this application;
FIG. 9 is a schematic flowchart 4 of a communication method according to an embodiment of this application;
FIG. 10 is a schematic flowchart 5 of a communication method according to an embodiment of this application;
FIG. 11 is a schematic diagram of a correspondence between a broadcast signal and a beam according to an embodiment of this application;
FIG. 12 is a schematic diagram of another correspondence between a broadcast signal and a beam according to an embodiment of this application;
FIG. 13 is a schematic diagram of repeater forwarding according to an embodiment of this application;
FIG. 14 is a schematic diagram in which a network device communicates with a first terminal device through a repeater according to an embodiment of this application;
FIG. 15 is a schematic diagram of a structure of a network device according to an embodiment of this application;
FIG. 16 is a schematic diagram of a structure of a first terminal device according to an embodiment of this application; and
FIG. 17 is a schematic diagram of a structure of a repeater according to an embodiment of this application.

### DESCRIPTION OF EMBODIMENTS

To facilitate understanding of technical solutions in embodiments of this application, a related technology in this application is first briefly described as follows:

### 1. Antenna port:

The antenna port is a logical concept, and one antenna port does not directly correspond to one physical antenna. For a low-frequency system, one antenna port may correspond to one or more antenna array elements, and these array elements jointly send a reference signal. A receiving end may consider the one or more antenna array elements as a whole, and does not need to distinguish between these array elements. For a high-frequency system, one antenna port may correspond to one beam. Similarly, a receiving end only needs to consider the beam as a whole, and does not need to distinguish between array elements. The English definition is: "An antenna port is defined such that the channel over which a symbol on the antenna port is conveyed can be inferred from the channel over which another symbol on the same antenna port is conveyed".

### 2. Beam:

The beam is a communication resource. The beam may be a wide beam, a narrow beam, or a beam in another type. A technology for forming the beam may be a beamforming technology or another technical means. The beamforming technology may be specifically a digital beamforming technology, an analog beamforming technology, or a hybrid digital/analog beamforming technology. Different beams may be considered as different resources. Same information or different information may be sent through different beams.

Optionally, a plurality of beams having a same or similar communication feature may be considered as one beam. The beam may include one or more antenna ports, configured to transmit a data channel, a control channel, a sounding signal, and the like. For example, a transmit beam may be signal strength distribution formed in different directions in space after a signal is transmitted through an antenna, and a receive beam may be signal strength distribution, in different directions in space, of a radio signal received from an antenna. It may be understood that the one or more antenna ports forming the beam may alternatively be considered as one antenna port set. In a protocol, the beam may alternatively be embodied as a spatial filter (spatial filter).

Optionally, in the protocol, the beam may be specifically represented by using identifiers of various signals, for example, a resource index of a channel state information reference signal (channel state information reference signal, CSI-RS), an index of a synchronization signal/physical broadcast channel block (SS/PBCH block, SSB), a resource index of a sounding reference signal (sounding reference signal, SRS), and a resource index of a tracking reference signal (tracking reference signal, TRS).

### 3. Reference signal and physical channel:

According to a long term evolution (long term evolution, LTE) or new radio (new radio, NR) protocol, at a physical layer, uplink communication includes transmission of an uplink physical channel and an uplink reference signal, and downlink communication includes transmission of a downlink physical channel and a downlink reference signal.

The uplink physical channel includes a physical random access channel (physical random access channel, PRACH), a physical uplink control channel (physical uplink control channel, PUCCH), a physical uplink data channel (physical uplink shared channel, PUSCH), and the like. The uplink reference signal includes a sounding reference signal (sounding reference signal, SRS), a physical uplink control channel demodulation reference signal (PUCCH demodulation reference signal, PUCCH-DMRS), a physical uplink data channel demodulation reference signal PUSCH-DMRS, an uplink phase noise tracking reference signal (phase noise tracking reference signal, PTRS), an uplink positioning reference signal (uplink positioning RS), and the like.

The downlink physical channel includes a physical broadcast channel (physical broadcast channel, PBCH), a physical downlink control channel (physical downlink control channel, PDCCH), a physical downlink data channel (physical downlink shared channel, PDSCH), and the like. The downlink reference signal includes a primary synchronization signal (primary synchronization signal, PSS), a secondary synchronization signal (secondary synchronization signal, SSS), a physical downlink control channel demodulation reference signal PDCCH-DMRS, a physical downlink data channel demodulation reference signal PDSCH-DMRS, a downlink phase tracking reference signal PTRS, a channel state information reference signal (channel state information reference signal, CSI-RS), a cell-specific reference signal (Cell-specific reference signal, CRS) (not available in NR), a time/frequency tracking reference signal (time/frequency tracking reference signal, TRS) (not available in LTE), an LTE/NR positioning reference signal (positioning RS), and the like.

### 4. Synchronization signal (synchronization signal, SS), PBCH, and synchronization signal/physical broadcast channel block (SS/PBCH block, SSB):

SS: is used to implement time-frequency synchronization between a terminal device and a network device and detect a physical cell identifier (physical cell identifier, PCI). The SS includes the PSS and/or the SSS, where the PSS is used for time-frequency synchronization and cell detection, and the SSS is used to transmit the physical cell identifier.

The PBCH is used to transmit a master information block (master information block, MIB), for example, a method for obtaining a small amount of important system information and other system information.

SSB: includes the SS and/or the PBCH, and is used by the terminal device to implement time-frequency synchronization, detect the physical cell identifier, obtain the master system information, and so on.

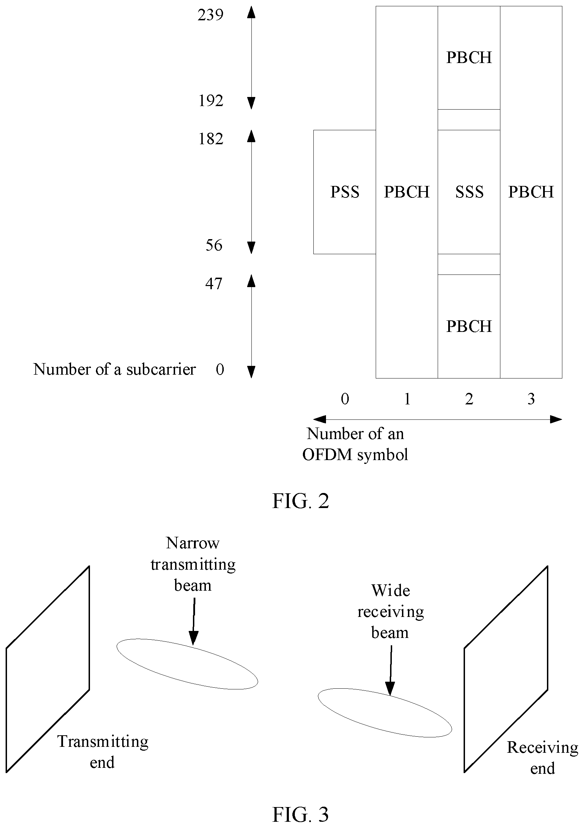

For example, as shown in FIG. 2, in time domain, one SSB occupies four consecutive orthogonal frequency division multiplexing (orthogonal frequency division multiplexing, OFDM) symbols. In frequency domain, one SSB occupies 240 consecutive subcarriers, and the 240 subcarriers are sequentially numbered from 0 to 239 in ascending order of frequencies.

### 5. Radio Resource Control (radio resource control, RRC) protocol and Media Access Control (media access control, MAC) protocol:

RRC protocol: is mainly used to implement radio resource management, control, and scheduling through a policy and a means. With a quality of service requirement met, the RRC protocol fully utilizes limited radio network resources to ensure that planned coverage is reached, thereby improving a service capacity and resource utilization.

MAC protocol: is located between an RRC layer and a physical layer, and is mainly used to control transmission at the physical layer, and the like.

### 6. Random access:

Random access: means that the terminal device sends a random access signal on a PRACH to trigger feedback of the network device, to establish a communication connection between the network device and the terminal device.

The random access includes contention-based random access and non-contention-based random access. In the contention-based random access, the terminal device autonomously selects and sends a random access preamble. Therefore, a plurality of terminal devices may simultaneously send a same random access preamble, and contention resolution is performed on a network device side. In the non-contention-based random access, the network device allocates a random access preamble to the terminal device, so that contention resolution does not need to be performed.

In new radio (new radio, NR), the terminal device can initiate random access only after detecting that the SSB performs downlink synchronization and obtains PRACH-related information. Therefore, there is an association relationship between a RACH occasion (RACH occasion, RO) and a frequency domain resource of a PRACH and an index of the SSB in NR. The network device may perform subsequent processing based on a time-frequency resource used by the terminal device to send the PRACH, for example, determine the SSB detected by the terminal device, or determine a beam for sending a random access response (random access response, RAR).

### 7. Beam matching:

In a communication network in which a beamforming technology is used, as shown in FIG. 3, a transmit beam and a receive beam first need to be matched, to maximize a gain between a transmitting end and a receiving end. Otherwise, high communication efficiency cannot be achieved.

Specifically, for the terminal device, a receive beam of the terminal device needs to match a transmit beam of the network device to ensure receiving performance of the terminal. Therefore, before sending data, the network device needs to send a reference signal in advance to assist the terminal device in measuring a beam of the network device. The terminal device reports a beam with good quality to the network device, and the terminal device also configures the corresponding receive beam for the transmit beam of the network device.

Currently, in a communication system in which amplification and forwarding are performed through a repeater, because the repeater can perform receiving and sending only through a wide beam oriented to the terminal device, a beam gain is small, and a communication distance between the repeater and the terminal device is affected.

Based on this, this application provides a communication method, so that a repeater can relay communication between a network device and a terminal device through a narrow beam with a higher gain, to increase a communication distance between a repeater and a terminal device, and improve downlink signal received quality of the terminal device and uplink signal received quality of a network device.

The following describes the technical solutions in embodiments of this application with reference to the accompanying drawings in embodiments of this application. In descriptions of this application, unless otherwise specified, "/" indicates an "or" relationship between associated objects. For example, A/B may indicate A or B. In this application, "and/or" describes only an association relationship between associated objects and indicates that three relationships may exist. For example, A and/or B may indicate the following three cases: Only A exists, both A and B exist, and only B exists, where A and B may be singular or plural. In addition, in the descriptions of this application, unless otherwise specified, "at least one" means one or more, and "a plurality of" means two or more. "At least one of the following items (pieces)" or a similar expression thereof refers to any combination of these items, including any combination of singular items (pieces) or plural items (pieces). For example, at least one item (piece) of a, b, or c may indicate a, b, c, a-b, a-c, b-c, or a-b-c, where "-" indicates that associated objects are in an "and" relationship, and a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity and an execution sequence, and the terms such as "first" and "second" do not indicate a definite difference.

The technical solutions in embodiments of this application may be applied to various communication systems, for example, an orthogonal frequency division multiple access (orthogonal frequency division multiple access, OFDMA) communication system, a single carrier frequency division multiple access (single carrier FDMA, SC-FDMA) communication system, a satellite communication system, a non-terrestrial communication network (non-terrestrial network, NTN), an internet of things (internet of things, loT) system, or a future evolved communication system. Terms "system" and "network" may be interchanged with each other. In addition, the communication systems may be further applied to a future-oriented communication technology, and are all applicable to the technical solutions provided in embodiments of this application.

The foregoing communication systems applicable to this application are merely examples for description, and are not limited thereto. Unified descriptions are provided herein, and details are not described below again.

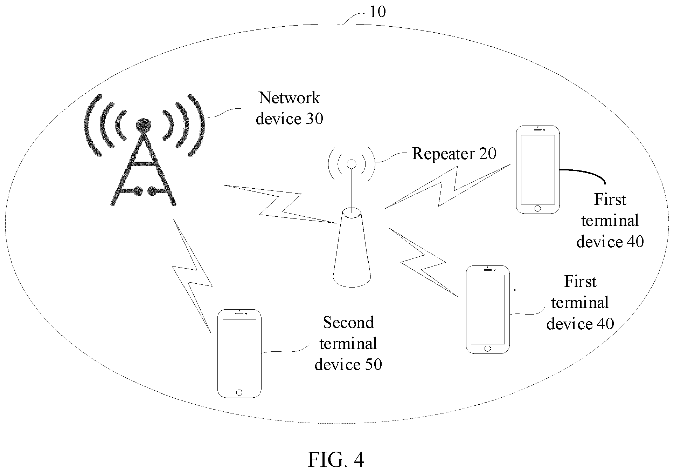

FIG. 4 shows a communication system 10 according to this application. The communication system 10 includes a repeater 20, a network device 30, and one or more terminal devices. At least one of the one or more terminal devices communicates with the network device 30 through the repeater 20. For ease of description, in the following embodiments of this application, a terminal device that communicates with the network device 30 through the repeater 20 is referred to as a first terminal device 40. Unified descriptions are provided herein, and details are not described in the following embodiments again.

Certainly, there may also be a terminal device that directly communicates with the network device 30 in the one or more terminal devices. In other words, the terminal device does not communicate with the network device 30 through the repeater. For ease of description, the terminal device that directly communicates with the network device 30 is referred to as a second terminal device 50 in the following embodiments of this application. Optionally, different terminal devices may communicate with each other.

Communication between the repeater 20, the network device 30, and the first terminal device 40 shown in FIG. 4 is used as an example. In this application, the network device 30 sends N first signals, for example, a broadcast signal or a reference signal, through a first beam, so that the repeater 20 forwards the N first signals through K second beams. The first terminal device 40 measures quality of the N first signals forwarded by the repeater 20, and finally sends first indication information to feed back index information of X first signals, where the index information of the X first signals corresponds to X second beams, and the second beam is a beam of the repeater. After receiving the first indication information, the network device communicates with the terminal device through one of the X second beams; or in other words, the repeater relays communication between the network device and the terminal device through the first second beam in the X second beams. N and K are positive integers greater than 1, and X is a positive integer less than or equal to N.

Based on this solution, the network device sends the N first signals through the first beam, so that the repeater forwards the N first signals through a plurality of second beams. Therefore, in comparison with a solution in the conventional technology in which the repeater performs forwarding through one wide beam, in the solution in this application, the repeater forwards a plurality of first signals through a plurality of narrow beams, and the network device finally communicates with the terminal device through one of the plurality of second beams. In other words, the repeater can relay communication between the network device and the terminal device through a narrow beam with a higher gain. This increases a communication distance between a repeater and a terminal device, and improves downlink signal received quality of the terminal device and uplink signal received quality of a network device.

Optionally, the repeater 20 in embodiments of this application, belonging to an intra-frequency amplification device, is a radio transmission relay device that enhances a signal in a wireless communication transmission process, and has no data transmission requirement. Specifically, the repeater 20 may amplify a downlink signal from the network device 30 and forward the downlink signal to the first terminal device 40, and/or amplify an uplink signal from the first terminal device 40 and forward the uplink signal to the network device 30.

It should be noted that the repeater in embodiments of this application may have another name, for example, a relay, a relay station, or a relay device. A name of the repeater is not specifically limited in this application.

Optionally, the network device 30 in embodiments of this application is a device that enables a terminal device to access a wireless network. The network device 30 may be a node in a radio access network, or may be referred to as a base station, or may be referred to as a radio access network (radio access network, RAN) node (or device). For example, the network device may include an evolved NodeB (evolved NodeB, NodeB, eNB, or e-NodeB) in a long term evolution (long term evolution, LTE) system or an LTE-advanced (LTE-Advanced, LTE-A) system, for example, a conventional macro base station eNB and a micro base station eNB in a heterogeneous network scenario; or may include a next generation NodeB (next generation NodeB, gNB) in an NR system; or may include a transmission reception point (transmission reception point, TRP), a home base station (for example, a home evolved NodeB or a home NodeB, HNB), a baseband unit (baseband unit, BBU), a baseband pool BBU pool, a Wi-Fi access point (access point, AP), or the like; or may include a central unit (central unit, CU) and a distributed unit (distributed unit, DU) in a cloud radio access network (cloud radio access network, Cloud RAN) system; or may include a base station in an NTN, that is, may be deployed on a high-altitude platform or a satellite. Alternatively, the network device may be a device that implements a base station function in IoT, for example, vehicle-to-everything (vehicle-to-everything, V2X) or device-to-device (device-to-device, D2D), or a device that implements a base station function in machine-to-machine (machine-to-machine, M2M). This is not limited in embodiments of this application.

Optionally, the base station in embodiments of this application may include various forms of base stations, for example, a macro base station, a micro base station (also referred to as a small cell), a relay station, an access point, a next generation NodeB (gNodeB, gNB), a home base station (for example, a home evolved NodeB or a home NodeB, HNB), a baseband unit (baseband unit, BBU), a transmission reception point (transmission reception point, TRP), a transmission point (transmission point, TP), and a mobile switching center. This is not specifically limited in embodiments of this application.

Optionally, the first terminal device 40 in embodiments of this application may be a device, such as a terminal or a chip that may be used in the terminal, configured to implement a wireless communication function. The terminal may be user equipment (user equipment, UE), an access terminal, a terminal unit, a terminal station, a mobile station, a remote station, a remote terminal, a mobile device, a wireless communication device, a terminal agent, a terminal apparatus, or the like in a 5G network or a future evolved public land mobile network (public land mobile network, PLMN). The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device or a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. Alternatively, the terminal may be a terminal having a communication function in IoT, for example, a terminal in V2X (for example, an internet of vehicles device), a terminal in D2D communication, or a terminal in M2M communication. The terminal may be mobile or fixed.

Optionally, the repeater 20, the network device 30, and the first terminal device 40 in embodiments of this application may also be referred to as communication apparatuses, and each may be a general-purpose device or a dedicated device. This is not specifically limited in embodiments of this application.

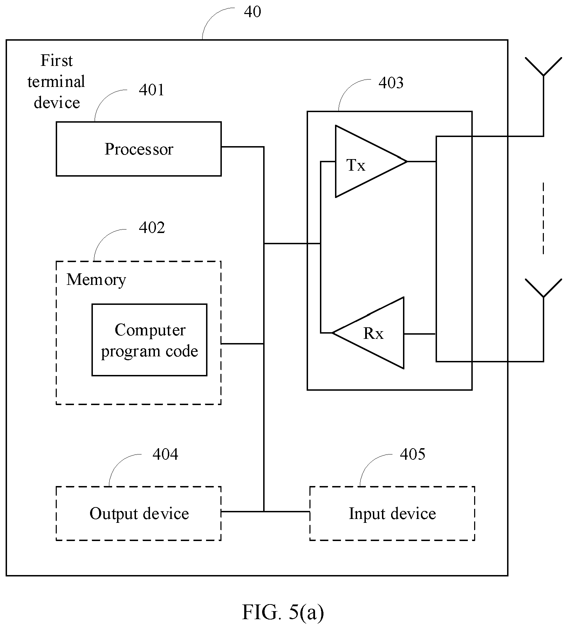

Optionally, FIG. 5(a) to FIG. 5(c) are schematic diagrams of structures of a repeater 20, a network device 30, and a first terminal device 40 according to an embodiment of this application.

FIG. 5(a) is a schematic diagram of a structure of the first terminal device 40. The first terminal device 40 includes at least one processor (an example in which the first terminal device 40 includes one processor 401 is used for description in FIG. 5(a) to FIG. 5(c)) and at least one transceiver (an example in which the first terminal device 40 includes one transceiver 403 is used for description in FIG. 5(a) to FIG. 5(c)). Optionally, the first terminal device 40 may alternatively include at least one memory (an example in which the first terminal device 40 includes one memory 402 is used for description in FIG. 5(a) to FIG. 5(c)), at least one output device (an example in which the first terminal device 40 includes one output device 404 is used for description in FIG. 5(a) to FIG. 5(c)), and at least one input device (an example in which the first terminal device 40 includes one input device 405 is used for description in FIG. 5(a) to FIG. 5(c)).

The processor 401, the memory 402, and the transceiver 403 are connected to each other through a communication line. The communication line may include a path for transmitting information between the foregoing components.

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application. During specific implementation, in an embodiment, the processor 401 may alternatively include a plurality of CPUs, and the processor 401 may be a single-core (single-CPU) processor or a multi-core (multi-CPU) processor. The processor herein may be one or more devices, circuits, or processing cores configured to process data (for example, computer program instructions).

The memory 402 may be an apparatus having a storage function. For example, the memory 402 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile optical disc, a Blu-ray disc, and the like), a magnetic disk storage medium or another magnetic storage device, or any other medium that can be used to carry or store expected program code in a form of an instruction or a data structure and that can be accessed by a computer. However, this is not limited herein. The memory 402 may exist independently, and is connected to the processor 401 through the communication line. The memory 402 may alternatively be integrated with the processor 401.

The memory 402 is configured to store computer-executable instructions for performing the solutions in this application, and the processor 401 controls execution of the computer-executable instructions. Specifically, the processor 401 is configured to execute the computer-executable instructions stored in the memory 402, to implement the method in embodiments of this application.

Optionally, the computer-executable instructions in embodiments of this application may also be referred to as application program code or computer program code. This is not specifically limited in embodiments of this application.

The transceiver 403 may use any apparatus such as a transceiver, and is configured to communicate with another device or a communication network, for example, the Ethernet, a RAN, or a wireless local area network (wireless local area network, WLAN). The transceiver 403 includes a transmitter (transmitter, Tx) and a receiver (receiver, Rx).

The output device 404 communicates with the processor 401, and may display information in a plurality of manners. For example, the output device 404 may be a liquid crystal display (liquid crystal display, LCD), a light emitting diode (light emitting diode, LED) display device, a cathode ray tube (cathode ray tube, CRT) display device, a projector (projector), or the like.

The input device 405 communicates with the processor 401, and may receive a user input in a plurality of manners. For example, the input device 405 may be a mouse, a keyboard, a touchscreen device, a sensor device, or the like.

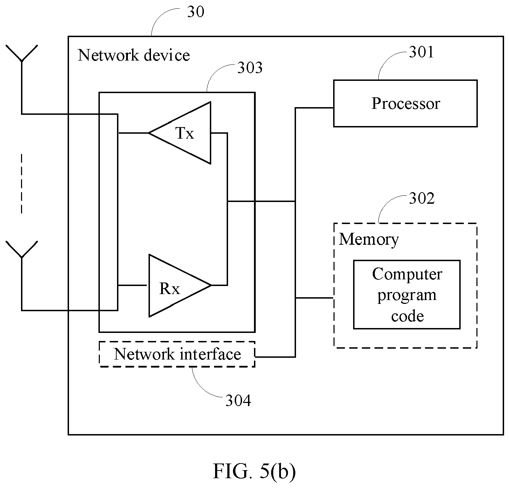

FIG. 5(b) is a schematic diagram of a structure of the network device 30. The network device 30 includes at least one processor (an example in which the network device 30 includes one processor 301 is used for description in FIG. 5(a) to FIG. 5(c)) and at least one transceiver (an example in which the network device 30 includes one transceiver 303 is used for description in FIG. 5(a) to FIG. 5(c)). Optionally, the network device 30 may alternatively include at least one memory (an example in which the network device 30 includes one memory 302 is used for description in FIG. 5(a) to FIG. 5(c)) and at least one network interface (an example in which the network device 30 includes one network interface 304 is used for description in FIG. 5(a) to FIG. 5(c)). The processor 301, the memory 302, the transceiver 303, and the network interface 304 are connected to each other through a communication line. The network interface 304 is configured to connect to a core network device through a link (for example, an S1 interface), or connect to a network interface of another network device through a wired or wireless link (for example, an X2 interface) (not shown in the FIG. 5(a) to FIG. 5(c)). This is not specifically limited in embodiments of this application. In addition, for related descriptions of the processor 301, the memory 302, and the transceiver 303, refer to the descriptions of the processor 401, the memory 402, and the transceiver 403 in the first terminal device 40. Details are not described herein again.

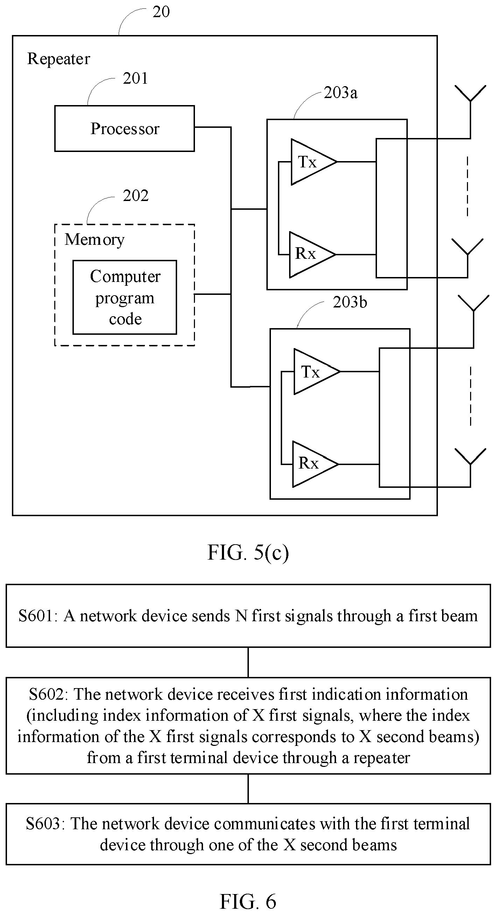

FIG. 5(c) is a schematic diagram of a structure of the repeater 20. The repeater 20 includes at least one processor (an example in which the repeater 20 includes one processor 201 is used for description in FIG. 5(a) to FIG. 5(c)) and at least one transceiver (an example in which the repeater 20 includes a transceiver 203a and a transceiver 203b is used for description in FIG. 5(a) to FIG. 5(c)). One of the transceiver 203a and the transceiver 203b is configured to send a signal to the network device and/or receive a signal from the network device, and the other is configured to send a signal to the first terminal device and/or receive a signal from the first terminal device.

Optionally, the repeater 20 may alternatively include at least one memory (an example in which the repeater 20 includes one memory 202 is used for description in FIG. 5(a) to FIG. 5(c)). The processor 201, the memory 202, the transceiver 203a, and the transceiver 203b are connected to each other through a communication line. In addition, for related descriptions of the processor 201, the memory 202, the transceiver 203a, and the transceiver 203b, refer to the descriptions of the processor 401, the memory 402, and the transceiver 403 in the first terminal device 40. Details are not described herein again.

It may be understood that the structure shown in FIG. 5(a) to FIG. 5(c) does not constitute a specific limitation on the repeater 20, the network device 30, or the first terminal device 40. For example, in some other embodiments of this application, the repeater 20, the network device 30, or the first terminal device 40 may include components more or fewer than those shown in FIG. 5(a) to FIG. 5(c), or combine some components, or split some components, or have different component arrangements. The components shown in the figure may be implemented by hardware, software, or a combination of software and hardware.

The following describes the communication method provided in embodiments of this application with reference to the accompanying drawings.

It should be noted that, in the following embodiments of this application, names of messages or names of parameters in messages between devices are merely examples, and the messages or the parameters may have other names during specific implementation. This is not specifically limited in embodiments of this application.

It may be understood that, in embodiments of this application, the first terminal device, the repeater, or the network device may perform some or all steps in embodiments of this application. These steps or operations are merely examples. In embodiments of this application, other operations or variations of various operations may be further performed. In addition, the steps may be performed in different sequences presented in embodiments of this application, and not all the operations in embodiments of this application may need to be performed.

First, the communication method provided in this application is described from perspectives of the network device, the repeater, and the first terminal device.

FIG. 6 shows a communication method according to this application. The communication method may be applied to a network device, and includes the following steps.

S601: The network device sends N first signals through a first beam.

The first signal is a broadcast signal or a reference signal, and N is a positive integer greater than 1.

For example, the broadcast signal may be an SSB, and the reference signal may be a CSI-RS or the like. Types of the broadcast signal and the reference signal are not specifically limited in this application.

S602: The network device receives first indication information from a first terminal device through a repeater.

The first indication information includes index information of X first signals fed back by the first terminal device, the index information of the X first signals corresponds to X second beams, that is, the index information of the X first signals is in a one-to-one correspondence with the X second beams, and X is a positive integer less than or equal to N. Optionally, the first indication information may alternatively include quality of the X first signals.

The second beam is a beam used when the repeater forwards the first signal. It may be understood that, in comparison with one wide beam through which the repeater orients to the terminal device in the conventional technology, the second beam in this application is a narrow beam.

Features of the X first signals are described in subsequent embodiments. Details are not described herein.

S603: The network device communicates with the first terminal device through one of the X second beams.

In other words, the network device communicates with the first terminal device based on forwarding of one second beam of the repeater.

Optionally, the one of the X second beams may be understood as follows: The first terminal device is located in a service range of the second beam, or signal quality is best when the repeater forwards a signal for the first terminal device through the second beam.

Based on this solution, the network device sends the N first signals through the first beam, and receives the index information of the X first signals fed back by the first terminal device, to communicate with the first terminal device through the one of the X second beams, of the repeater, that correspond to the index information of the X first signals. In other words, the network device can communicate with the terminal device through a narrow beam with a higher gain of the repeater, to increase a communication distance between a repeater and a terminal device, and improve downlink signal received quality of the terminal device and uplink signal received quality of a network device.

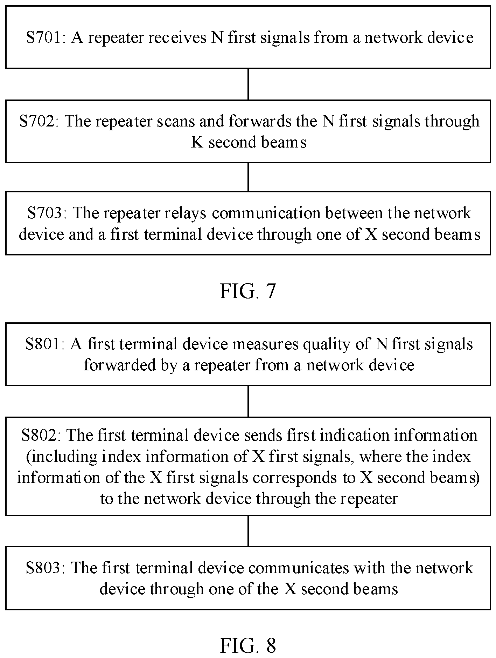

FIG. 7 shows another communication method according to this application. The communication method may be applied to a repeater, and includes the following steps.

S701: The repeater receives N first signals from a network device.

The first signal is a broadcast signal or a reference signal. Refer to the related descriptions in step S601. Details are not described herein again.

S702: The repeater forwards the N first signals through K second beams.

K is a positive integer greater than 1. For the second beam, refer to the descriptions in step S602. Details are not described herein again.

S703: The repeater relays communication between the network device and a first terminal device through one of X second beams.

The X second beams correspond to index information of X first signals fed back by the first terminal device, and X is a positive integer less than or equal to N. It may be understood that X is further less than or equal to K. In other words, X is less than or equal to min(N, K), and min(x, y) represents a minimum value of x and y. For related descriptions of the one of the X second beams, refer to the descriptions in step S603. Details are not described herein again.

Based on this solution, after receiving a plurality of first signals sent by the network device, the repeater forwards the N first signals through a plurality of second beams. Therefore, in comparison with a solution in the conventional technology in which the repeater performs forwarding through one wide beam, in the solution in this application, the repeater forwards the plurality of first signals through a plurality of narrow beams, and the repeater finally relays communication between the network device and the terminal device through a narrow beam with a higher gain. This increases a communication distance between a repeater and a terminal device, and improves downlink signal received quality of the terminal device and uplink signal received quality of a network device.

FIG. 8 shows still another communication method according to this application. The communication method may be applied to a first terminal device, and includes the following steps.

S801: The first terminal device measures quality of N first signals forwarded by a repeater from a network device.

The first signal is a broadcast signal or a reference signal. Refer to the related descriptions in step S601. Details are not described herein again.

Optionally, the signal quality may be represented by a signal received power and signal received quality. A signal quality representation method is not specifically limited in this application.

S802: The first terminal device sends first indication information to the network device through the repeater.

The first indication information includes index information of X first signals, the index information of the X first signals corresponds to X second beams, and the second beam is a beam of the repeater. The first indication information may alternatively include quality of the X first signals.

Optionally, the index information of the first signal is used to uniquely identify one first signal, and may be an index of the first signal, or may be information indicating the index of the first signal.

Features of the X first signals are described in subsequent embodiments. Details are not described herein.

S803: The first terminal device communicates with the network device through one of the X second beams.

In other words, the network device communicates with the first terminal device based on forwarding of one second beam of the repeater. For related descriptions of the one of the X second beams, refer to the descriptions in step S603. Details are not described herein again.

Based on this solution, the first terminal device can communicate with the network device through a narrow beam with a higher gain of the repeater, to increase a communication distance between a repeater and a terminal device, and improve communication quality.

Based on this solution, the first terminal device measures quality of a plurality of first signals forwarded by the repeater from the network device, to feed back the index information of the X first signals, where the index information of the X first signals corresponds to the X second beams; and finally communicates with the network device through the one of the X second beams. In other words, the first terminal device can communicate with the network device through a narrow beam with a higher gain of the repeater, to increase a communication distance between a repeater and a terminal device, and improve downlink signal received quality of the terminal device and uplink signal received quality of a network device.

FIG. 6 to FIG. 8 show communication methods separately described from a perspective of each device. The following describes the communication method provided in this application by using an example in which the network device, the repeater, and the first terminal device interact with each other.

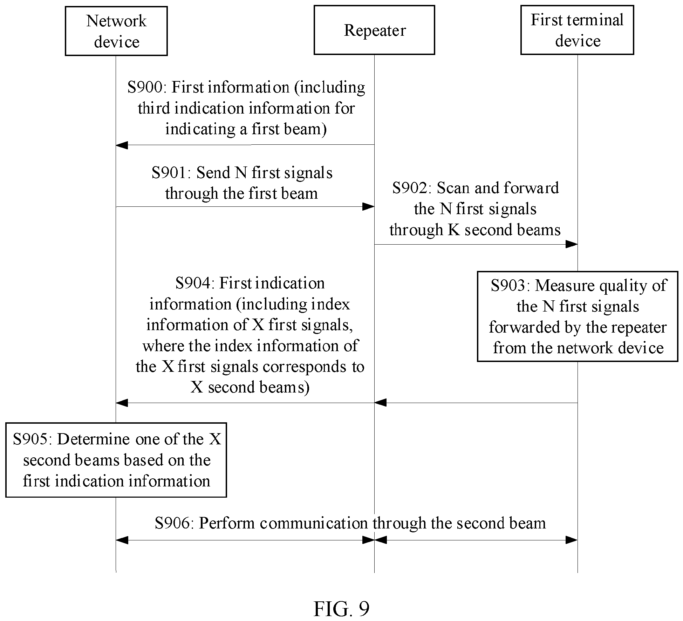

FIG. 9 shows a communication method according to this application. The method includes the following steps.

S900: A repeater sends first information to a network device. Correspondingly, the network device receives the first information from the repeater.

Optionally, before step S900, the repeater in this application receives a broadcast signal of the network device through beam scanning, to determine a beam, of the network device, that is for communication between the network device and the repeater, and a narrow receive/transmit beam, of the repeater, that is for communication with the network device.

Optionally, if the broadcast signal received by the repeater is a first broadcast signal, the beam, of the network device, that is for communication between the network device and the repeater is a beam for sending the first broadcast signal by the network device.

For example, assuming that the network device sends an SSB 0 to an SSB 15 in a time division manner through beam scanning, and the broadcast signal received by the repeater through beam scanning is the SSB 9, the beam, of the network device, that is for communication between the network device and the repeater is a beam for sending the SSB 9.

Optionally, the beam for communication between the network device and the repeater may also be understood as: a beam used by the network device to align with the repeater; or the repeater is located in a service range of the beam; or a service range of the beam covers a location of a first terminal device.

Optionally, the repeater may alternatively implement time synchronization with the network device based on the received broadcast signal. Further, the repeater initiates random access to the network device to access the network device, and then performs step S900.

The first information includes third indication information, and optionally may alternatively include attribute information. The attribute information reports an attribute of the repeater to the network device, to be specific, notifies the network device that a sender of the first information is the repeater and there is no data transmission requirement. The third indication information indicates a first beam, and the first beam is the beam, of the network device, that is for communication between the network device and the repeater.

It should be noted that this embodiment of this application further relates to "second indication information", which is described in subsequent embodiments. Details are not described herein.

S901: The network device sends N first signals through the first beam.

Optionally, after receiving the first information, the network device may determine the beam, of the network device, that is for communication between the network device and the repeater, namely, the first beam, and then send the N first signals through the first beam. The N first signals are different from each other.

Optionally, that the network device sends N first signals through the first beam may include: The network device sends the N first signals for N times through the first beam. In other words, the network device repeatedly sends the first beam for N times, and the first beam sent each time carries a different first signal.

It should be noted that, in this application, a quantity of repeated sending times of the first beam is a total quantity of sending times of the first beam. Unified descriptions are provided herein, and details are not described in the following embodiments again.

Optionally, when the first signal is a broadcast signal, the repeatedly sent first beam is sent by using a resource of the first broadcast signal. When the first signal is a reference signal, the network device may configure a repeated reference signal resource, and the repeatedly sent first beam is sent by using the repeated reference signal resource.

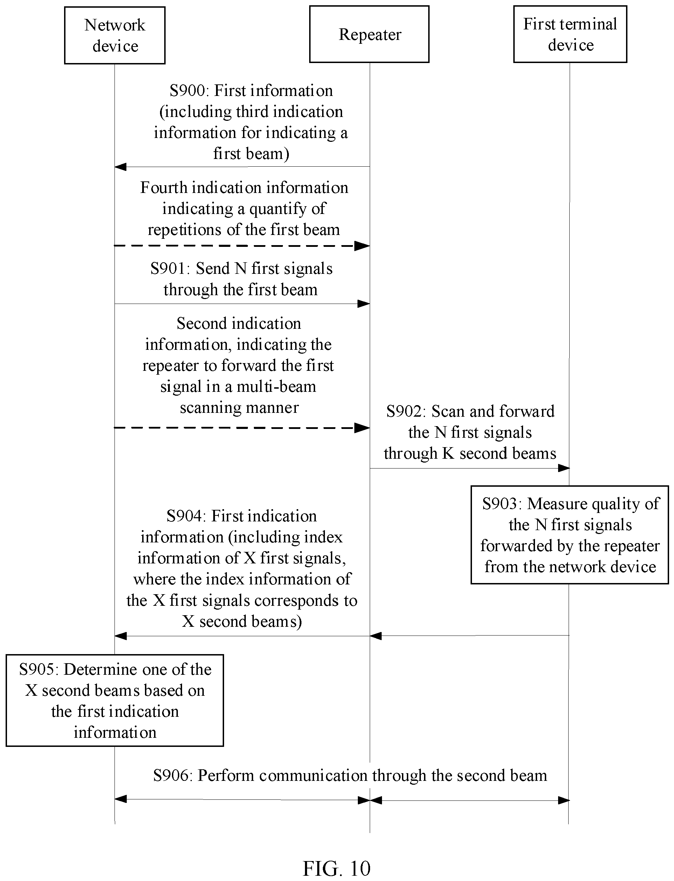

Optionally, the network device may indicate a quantity of repetitions of the first beam to the repeater. As shown in FIG. 10, the method may further include: The network device sends fourth indication information to the repeater, and correspondingly the repeater receives the fourth indication information from the network device. The fourth indication information indicates the quantity of repetitions of the first beam.

Optionally, when the first signal is a broadcast signal, the fourth indication information may indicate the quantity of repetitions of the first beam in one of the following three manners:

Manner 1: The fourth indication information includes a quantity of repetitions of a beam corresponding to a first signal group.

The first signal group includes the N first signals, or the N first signals belong to the first signal group. In this manner, the quantity of repetitions of the first beam is equal to the quantity of repetitions of the beam corresponding to the first signal group.

In other words, the fourth indication information includes a quantity of repetitions of a beam corresponding to a first broadcast signal group. The first broadcast signal group includes N broadcast signals, or the N broadcast signals belong to the first broadcast signal group. In this case, the quantity of repetitions of the first beam is equal to the quantity of repetitions of the beam corresponding to the first broadcast signal group.

Optionally, broadcast signals in a system may be divided into a plurality of broadcast signal groups. The network device may send, to the repeater, a quantity of repetitions of a beam corresponding to each broadcast signal group. The repeater determines the fourth indication information based on a broadcast signal (namely, the first broadcast signal in S900) received when the repeater initially accesses the network device, to determine the quantity of repetitions of the first beam.

For example, the broadcast signal is an SSB, and SSBs supported by the system include an SSB 0 to an SSB 15, a total of 16 SSBs. Assuming that the 16 SSBs are divided into two SSB groups, a first SSB group includes an SSB 0 to an SSB 7, and a second SSB group includes an SSB 8 to an SSB 15, quantities of repetitions of beams that correspond to the two SSB groups and that are sent by the network device to the repeater are respectively 1 and 4. After receiving a quantity of repetitions of a beam corresponding to each SSB group, the repeater determines that the fourth indication information includes a quantity of repetitions of a beam corresponding to an SSB group in which the first broadcast signal (for example, the SSB 9) is located, namely, the quantity 4 of repetitions of the beam corresponding to the second SSB group, to determine that the quantity of repetitions of the first beam is equal to the quantity 4 of repetitions of the beam corresponding to the second SSB group.

When the quantity of repetitions of the beam corresponding to the SSB group is 1, it indicates that a beam for sending an SSB in the SSB group is repeated once. That is, eight SSBs included in the SSB group are sent through eight beams. When the quantity of repetitions of the beam corresponding to the SSB group is a positive integer P greater than 1, it indicates that a beam for sending an SSB in the SSB group is repeated P times. That is, eight SSBs included in the SSB group are sent through 8/P beams, and P SSBs are sent through each beam. For example, when the quantity of repetitions of the beam corresponding to the second SSB group is equal to 4, it indicates that the SSB 8 to the SSB 15 are sent through two beams. One of the two beams is a beam for sending the SSB 9 during initial access, namely, the first beam. Therefore, in step S901, the first beam is repeated four times, and four SSBs included in the second SSB group, for example, the SSB 8 to the SSB 11, are sent. The other beam in the two beams may be a beam, of the network device, that is for communication between the network device and another repeater. Similarly, a method performed by the another repeater is the same as the method performed by the repeater in this application. Details are not described herein.

Optionally, grouping of the broadcast signal may be protocol-specified, or may be determined by the network device. This is not specifically limited in this application. When the network device determines the grouping, the network device needs to notify the repeater of grouping information.

Optionally, it may also be specified that different broadcast signals in only a part of broadcast signal groups can be sent through a same beam. For example, different broadcast signals in the first L broadcast signal groups or the last L broadcast signal groups in a plurality of broadcast signal groups can be sent through a same beam. In this case, if the first broadcast signal does not belong to the part of broadcast signal groups, the solution in this application is not performed. If the first broadcast signal belongs to the part of broadcast signal groups, the network device sends, to the repeater, repetition information of beams respectively corresponding to the part of broadcast signal groups, so that notification overheads and broadcast signal sending overheads can be reduced, and resources can be saved.

Manner 2: The fourth indication information includes a quantity N of repetitions of the first beam.

Optionally, the network device may send a quantity of repetitions of each beam of the network device to the repeater. The quantity of repetitions of the beam is a quantity of broadcast signals sent by the network device through the beam. The repeater may determine the fourth indication information based on the first broadcast signal, to determine the quantity of repetitions of the first beam.

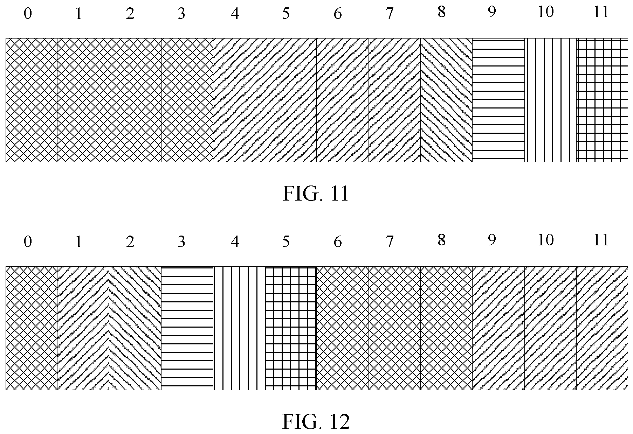

For example, it is assumed that the network device sends a total of 12 broadcast signals: a broadcast signal 0 to a broadcast signal 11 through six beams. As shown in FIG. 11, each rectangle represents one broadcast signal, a number above the rectangle represents an index of the broadcast signal, a filling pattern of the rectangle represents a beam for sending the broadcast signal, a same filling pattern represents a same beam, and different filling patterns represent different beams. In this case, quantities of repetitions of the six beams in FIG. 11 are respectively 4, 4, 1, 1, 1, and 1. That is, the six beams respectively send four broadcast signals, four broadcast signals, one broadcast signal, one broadcast signal, one broadcast signal, and one broadcast signal. If the first broadcast signal is the broadcast signal 3, the first beam is the 1^{st} beam in the six beams, and the quantity of repetitions of the first beam is 4. The second beam in the six beams may be a beam, of the network device, that is for communication between the network device and another repeater.

Manner 3: The fourth indication information includes a quantity (N-Y) of repetitions of the first beam.

Y is a quantity of times that the first signal has been sent, or Y is a quantity of first signals that are sent through the first beam. Y is a positive integer.

Optionally, the network device may first send Q broadcast signals through Q beams, and then send the fourth indication information to indicate the quantity (N-Y) of repetitions of the first beam. The Q beams include the first beam, and a quantity of broadcast signals that are sent through the first beam is a quantity of sent first signals.

For example, Q is equal to 6, Y is equal to 1, and N is equal to 4. It is assumed that the system supports a total of 12 broadcast signals: a broadcast signal 0 to a broadcast signal 11. As shown in FIG. 12, the network device first sends first six broadcast signals through six beams, and then sends the fourth indication information to indicate a quantity 3 of repetitions of the first beam. In FIG. 12, an example in which the first beam is a beam for sending the broadcast signal 0 is used, that is, in addition to the broadcast signal 0, the network device further sends three broadcast signals through the first beam. In FIG. 12, an example in which the three broadcast signals are the broadcast signal 6 to the broadcast signal 8 is used. Further, when there is another repeater in the system, the network device further sends the broadcast signal 9 to the broadcast signal 11 through a beam for sending the broadcast signal 1.

Optionally, when the fourth indication information is implemented in Manner 1 and Manner 2, the fourth indication information may be sent before step S901. When the fourth indication information is implemented in Manner 3, the fourth indication information may be sent in a process of performing step S901. For example, the network device sends the fourth indication information after sending Y first signals through the first beam.

The foregoing is an implementation of the fourth indication information when the first signal is the broadcast signal.

Optionally, when the first signal is a reference signal, the fourth indication information may be configuration information of a repeated reference signal resource. In other words, a quantity of repetitions of the reference signal resource configured by the network device is equal to a quantity of repetitions of the first beam.

Optionally, a quantity N of repetitions of the first beam is determined by the network device based on a total quantity M of beams supported by the repeater, and M is a positive integer greater than or equal to K. For example, the quantity N of repetitions of the first beam is less than or equal to the total quantity M of beams supported by the repeater.

Optionally, the total quantity M of beams supported by the repeater may be reported by the repeater to the network device. In other words, before step S901, the method further includes: The repeater sends the total quantity M of beams supported by the repeater to the network device, and correspondingly the network device receives the total quantity M of beams supported by the repeater from the repeater. In some implementation scenarios, the total quantity M of beams is used to determine the quantity N of repetitions of the first beam.

Optionally, the total quantity M of beams supported by the repeater may be included in the first information in step S900, or may be sent separately from the first information. This is not specifically limited in this application.

It should be noted that there is no coupling relationship between the total quantity M, of beams supported by the repeater, that is reported by the repeater to the network device and the quantity N, of repetitions of the first beam, that is determined by the network device based on the total quantity M of beams. That is, the repeater may report the total quantity M of beams supported by the repeater to the network device in any case.

Optionally, after receiving the fourth indication information, the repeater may determine a quantity K of second beams, to perform the following step S902.

S902: The repeater forwards the N first signals through the K second beams, where K is a positive integer less than or equal to M.

Optionally, K is equal to N. In this case, that the repeater forwards the N first signals through the K second beams may mean that the repeater sends one second beam at each of K moments, where a direction of the second beam sent at each moment is different, and the second beam sent at each moment carries one of the N first signals.

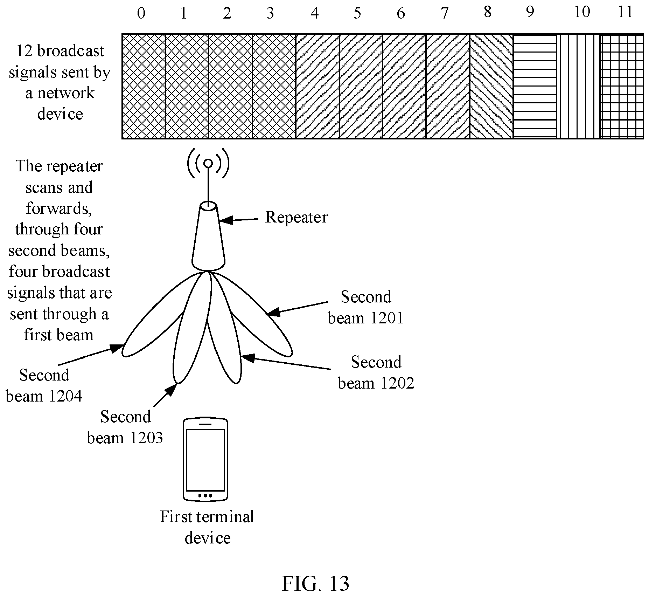

For example, N is equal to 4, and K is equal to N. Based on the example shown in FIG. 11, as shown in FIG. 13, an example in which the first beam is a beam used by the network device to send a broadcast signal 0 to a broadcast signal 3 is used. The repeater may forward the broadcast signal 0 to the broadcast signal 3 through four second beams (a second beam 1201, a second beam 1202, a second beam 1203, and a second beam 1204). Similarly, beams used by the network device to send a broadcast signal 4 to a broadcast signal 7 may be beams, of the network device, that are for communication between the network device and another repeater, and the another repeater may also forward the broadcast signal 4 to the broadcast signal 7 through a plurality of beams.

Optionally, a manner in which the repeater forwards the first signal in step S902 may be explicitly or implicitly indicated by the network device.

In an implementation, the network device explicitly indicates the forwarding manner of the first signal. To be specific, as shown in FIG. 10, before step S902, the network device may send second indication information to the repeater, and correspondingly the repeater receives the second indication information from the network device, where the second indication information indicates the repeater to forward the first signal in a multi-beam forwarding manner.

It may be understood that multi-beam forwarding in this application means that a plurality of beams are used for forwarding at a plurality of moments, where one beam is sent at one moment.

In another implementation, the network device implicitly indicates the forwarding manner of the first signal. For example, when the first signal is a broadcast signal, the network device configures the N first signals to be associated with different random access resources. After receiving the N first signals, if the N first signals are associated with different random access resources, the repeater forwards the first signals in a multi-beam forwarding manner; or if the N first signals are associated with a same random access resource, the repeater forwards the N first signals in a wide beam repeated forwarding manner. This manner is a conventional technology, and is not described herein again.

Alternatively, optionally, a manner in which the repeater forwards the first signal in step S902 may be autonomously determined by the repeater. The repeater may alternatively report the forwarding manner, of the repeater, that is autonomously determined by the repeater to the network device, for example, report the forwarding manner of the repeater in the first information. The forwarding manner of the repeater may be multi-beam forwarding or wide beam repeated forwarding. In this application, multi-beam forwarding is used as an example for description. The wide beam repeated forwarding manner is the conventional technology, and is not described herein again.

Optionally, when the first signal is a broadcast signal, after the network device receives the forwarding manner, if the forwarding manner is multi-beam forwarding, the network device may configure the N first signals to be associated with different random access resources; or if the forwarding manner is wide beam repeated forwarding, the network device may configure the N first signals to be associated with a same random access resource.

S903: The first terminal device measures quality of the N first signals forwarded by the repeater from the network device.

Optionally, the first terminal device may measure the quality of the first signal in a plurality of manners, and the quality of the first signal may also be represented in a plurality of forms, for example, represented by a value of a signal received power. A measurement manner and a representation form of the quality are not specifically limited in this application.

S904: The first terminal device sends first indication information to the network device through the repeater. Correspondingly, the network device receives the first indication information from the first terminal device through the repeater.

The first indication information includes index information of X first signals fed back by the first terminal device. The index information of the X first signals corresponds to X second beams. A second beam corresponding to index information of a specific first signal is a second beam that carries the first signal when the repeater forwards the N first signals. Optionally, the first indication information may alternatively include quality information of the X first signals.

Optionally, the X first signals may include X first signals with best quality in the N first signals; or may include X first signals, in the N first signals, whose quality is greater than or equal to a first threshold; or may include X first signals, in the N first signals, whose quality is greater than or equal to average quality of the N first signals.

Further, optionally, when X is greater than or equal to 2, after the X first signals that meet a condition are sorted by quality, a quality difference between at least two adjacent first signals is greater than or equal to a second threshold. For example, assuming that the X first signals include a first signal 1, a first signal 2, and a first signal 3, and the first signal 3, the first signal 1, and the first signal 2 are sorted by quality, a quality difference between the first signal 3 and the first signal 1 is greater than or equal to the second threshold, or a quality difference between the first signal 1 and the second signal 2 is greater than or equal to the second threshold.

It should be noted that, in this application, measurement of the quality of the first signal is related to the representation form of the quality. For example, when the signal quality is represented by using the value of the signal received power, a larger signal received power indicates better quality; on the contrary, a smaller signal received power indicates poorer quality.

It may be understood that, because the N first signals are forwarded by the repeater through the K second beams, and directions of the K second beams are different, for the first terminal device, a measured quality difference between different first signals may be large. In this case, the first terminal device may send the first indication information to feed back the index information of the X first signals. Further, optionally, when a difference between maximum quality and minimum quality in the quality of the N first signals is greater than or equal to a third threshold, the first terminal device sends the first indication information to feed back the index information of the X first signals.

Optionally, the network device may obtain the manner in which the repeater forwards the first signal. For the repeater that forwards the N first signals in the multi-beam forwarding manner, the network device may configure a terminal device in coverage of the repeater to feed back indexes of the X first signals, or feed back average quality of the N first signals, and the first terminal device determines a final feedback form based on the third threshold. For example, when the difference between maximum quality and minimum quality in the quality of the N first signals is greater than or equal to the third threshold, a second beam that carries the index information of the X first signals is fed back; otherwise, the average quality is fed back. For the repeater that repeatedly forwards the N first signals through a wide beam, the network device may configure a terminal device in coverage of the repeater to feed back the average quality of the N first signals.

Optionally, the first threshold, the second threshold, or the third threshold may be protocol-specified, or may be indicated by the network device to the first terminal device, or may be autonomously determined by the first terminal device. This is not specifically limited in this application.

Optionally, during actual application, there may be a terminal device that is not covered by the repeater, namely, a terminal device that directly communicates with the network device, for example, the second terminal device 50 in FIG. 4. The second terminal device can measure the quality of the first signals sent by the network device for N times through the first beam. Because the N first signals are sent through a same beam, a quality difference between different first signals is small, and the second terminal device may average the quality of the N first signals, to feed back the average quality of the N first signals.

S905: The network device determines one of the X second beams based on the first indication information.

Optionally, the one of the X second beams may be understood as follows: The first terminal device is located in a service range of the second beam, or signal quality is best when the repeater forwards a signal for the first terminal device through the second beam. The one of the X second beams may also be referred to as a beam used by the repeater to align with the first terminal device. For example, based on the example shown in FIG. 13, when the X second beams are the second beam 1202 and the second beam 1203, the one of the X second beams may be the second beam 1202 or the second beam 1203.

Optionally, the one of the X second beams may be a second beam that carries a first signal with best quality, or a second beam that serves a minimum quantity of terminal devices.

Optionally, the terminal device may send report indication information to the network device, where the report indication information indicates a type of information reported by the terminal device, and the type of the information may be the index information of the X first signals, or the index information of the X first signals and the quality of the X first signals, or the average quality of the N first signals.

Optionally, for a terminal device that reports the average quality, the network device may determine that the terminal device is the second terminal device, namely, the terminal device that directly communicates with the network device, and then may communicate with the second terminal device according to an existing protocol. Details are not described herein. Alternatively, the network device may determine that the terminal device is the terminal device covered by the repeater that forwards the N first signals through the wide beam, and then communicate with the terminal device in an existing manner in which the repeater participates in communication. Details are not described herein.

S906: The network device communicates with the first terminal device through the one of the X second beams.

For example, based on the example shown in FIG. 13, when the X second beams are the second beam 1202 and the second beam 1203, assuming that the one of the X second beams is the second beam 1202, the network device communicates with the first terminal device through the second beam 1202.

Optionally, the repeater in this application includes a beam-controllable repeater and a beam-uncontrollable repeater. The beam-controllable repeater means that the repeater supports adjustment of a beam of the repeater according to an indication of the network device, and the beam-uncontrollable repeater means that the repeater does not support adjustment of a beam of the repeater according to an indication of the network device.

### For the beam-controllable repeater:

Before step S906, the network device further sends fifth indication information to the repeater, and correspondingly the repeater receives the fifth indication information from the network device, where the fifth indication information indicates the one of the X second beams.

Optionally, the network device may send the fifth indication information to the repeater through a first PDCCH, RRC signaling, or MAC layer signaling. Then, the network device sends scheduling information through a second PDCCH to schedule transmission of the first terminal device. The repeater may forward the scheduling information to the first terminal device through the second beam indicated by the network device, and then forward data information between the first terminal device and the network device through the second beam.

### For the beam-uncontrollable repeater:

Optionally, the network device cannot indicate the repeater to send a second beam a at any time. Therefore, that the network device communicates with the first terminal device through the second beam a may include: The network device communicates with the first terminal device within a time unit corresponding to the second beam a through the second beam a, where the second beam a is the one of the X second beams.

Optionally, the time unit may be a symbol, a slot, a subframe, a half-frame, a radio frame (or referred to as a frame), or a superframe. This is not specifically limited in this embodiment of this application. The "symbol" in this embodiment of this application may be an orthogonal frequency division multiple access (orthogonal frequency division multiplexing, OFDM) symbol, a single carrier frequency division multiple access (single carrier frequency division multiple access, SC-FDMA) symbol, or the like. This is not specifically limited in this application.

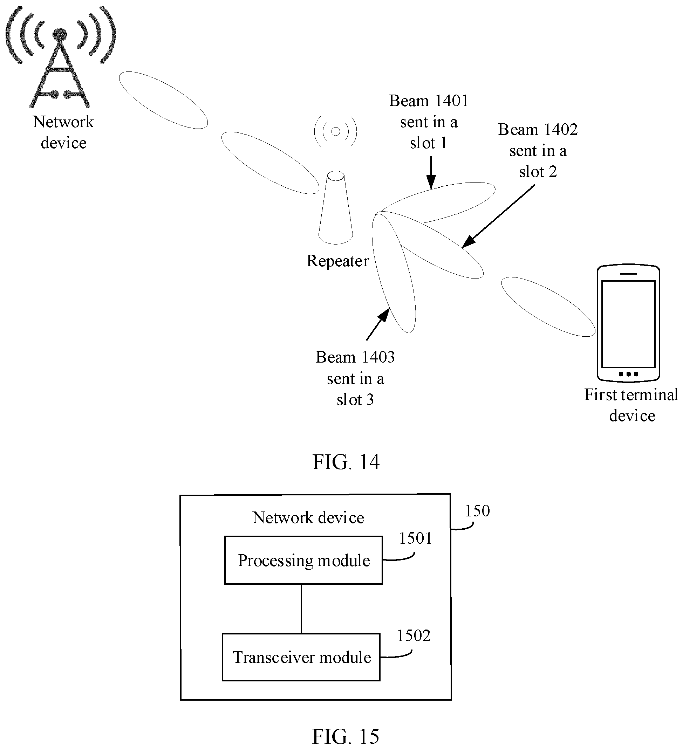

For example, as shown in FIG. 14, an example in which the time unit is a slot is used. Assuming that the second beam a (namely, a beam 1402) of the repeater is sent in a slot 2, the network device communicates with the first terminal device in the slot 2 through the beam 1402.

Optionally, the repeater may report beam indication information to the network device, where the beam indication information may include information about a beam sent by the repeater in each time unit. After receiving the beam indication information, the network device may determine, based on the beam indication information, a time unit in which the repeater sends the second beam a, and then communicate with the first terminal device within the time unit corresponding to the second beam through the second beam.

In conclusion, in this application, the network device sends the N first signals through the first beam, so that the repeater forwards the N first signals through a plurality of second beams. Therefore, the first terminal device measures the quality of the N first signals forwarded by the repeater, and finally sends the first indication information to feed back the index information of the X first signals. After receiving the first indication information, the network device determines, based on the first indication information, the one of the X second beams corresponding to the index information of the X first signals. Then, the network device communicates with the terminal device through the second beam, so that the repeater relays communication between the network device and the terminal device through a narrow beam with a higher gain, to increase a communication distance between a repeater and a terminal device, and improve downlink signal received quality of the terminal device and uplink signal received quality of a network device.

Optionally, in an implementation scenario of this application, the repeater may feed back a state of the repeater to the network device, so that the network device obtains the state of the repeater, to determine a data transmission manner based on the state of the repeater, for example, whether to continue to perform step S906.

Optionally, the state of the repeater includes a working state and a non-working state. In the working state, the repeater provides a forwarding service for communication between the network device and the terminal device. In the non-working state, the repeater does not provide a forwarding service.

Optionally, the repeater may feed back the state of the repeater to the network device in one or more of the following manners:
In a possible implementation, the repeater sends planned working duration of the repeater to the network device, and correspondingly the network device determines the state of the repeater based on the planned working duration of the repeater. For example, when a time interval from a first moment to a current moment is less than the planned working duration, the network device determines that the repeater is in the working state; or when a time interval from a first moment to a current moment is greater than or equal to the planned working duration, the network device determines that the repeater is in the non-working state.

Optionally, the first moment is a moment at which the network device receives the planned working duration, or is a start moment at which the repeater provides the forwarding service for communication between the network device and the terminal device for the first time.

In another possible implementation, the repeater initiates random access to the network device, and correspondingly the network device determines the state of the repeater based on the random access initiated by the repeater. For example, when the repeater initiates random access, an identifier of the repeater may be reported, and the network device may determine that the repeater is in the working state after receiving the identifier of the repeater in a random access process.

Optionally, the random access may be initiated by the repeater that is scheduled by the network device. In this case, the random access may be contention-based random access or non-contention-based random access. Alternatively, the random access may be autonomously initiated by the repeater. For example, when the repeater is in the working state, the repeater initiates random access at an interval of T. In this case, the random access may be contention-based random access.

In still another possible implementation, the repeater sends an uplink signal to the network device, and correspondingly the network device determines the state of the repeater based on the uplink signal from the repeater. For example, the network device may determine that the repeater is in the working state provided that the network device receives the uplink signal sent by the repeater.

Optionally, the uplink signal may be sent by the repeater that is scheduled by the network device; or may be autonomously initiated by the repeater. For example, when the repeater is in the working state, the repeater may periodically send the uplink signal, to feed back to the network device that the repeater is in the working state.

Optionally, in another implementation scenario of this application, when the repeater is in the working state, the repeater may send request information to the network device, where the request information requests to hand over to the non-working state. Correspondingly, after receiving the request information from the repeater, the network device may determine, based on a service condition of the network device, whether to allow the repeater to hand over to the non-working state. For example, when there is no data transmission requirement between the network device and a terminal device in coverage of the repeater, the network device may determine to allow the repeater to hand over to the non-working state; or when there is no data transmission requirement between the network device and a terminal device in coverage of the repeater, the network device may determine not to allow the repeater to hand over to the non-working state. Then, the network device may send response information to the repeater based on a determining result of the network device, to indicate that the repeater is allowed to hand over to the non-working state, or indicate that the repeater is not allowed to hand over to the non-working state; or the network device does not send response information of the request information to the repeater, to indicate that the repeater is allowed to hand over to the non-working state.

Based on this solution, the network device can determine, based on the service condition of the network device, whether to allow the repeater to hand over to the non-working state, to reduce a possibility that a service of the network device is interrupted, and improve service continuity.

Optionally, in still another implementation scenario of this application, the repeater may autonomously determine to hand over to the non-working state, and then send notification information to the network device, to notify the repeater that the repeater has handed over to the non-working state. Based on this solution, power consumption of the repeater may be reduced.

The foregoing describes the method in which the network device sends the broadcast signal or the downlink reference signal, to determine the beam, of the repeater, that is used by the repeater to relay communication between the network device and the terminal device.

Optionally, in this application, the terminal device may repeatedly send a plurality of uplink reference signals. The repeater receives, through a plurality of beams, the plurality of uplink reference signals repeatedly sent by the terminal device, and repeatedly forwards the plurality of uplink reference signals through a beam for communication with the network device. The network device measures quality of the plurality of uplink reference signals forwarded by the repeater, to determine the beam, of the repeater, that is used by the repeater to relay communication between the network device and the terminal device, so that the network device communicates with the terminal device through the beam of the repeater. The features in the embodiments shown in FIG. 6 to FIG. 10 may be applied to the solution through proper variations or analogy. Details are not described herein.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

It may be understood that, in the foregoing embodiments, the methods and/or steps implemented by the first terminal device may alternatively be implemented by a component (for example, a chip or a circuit) that can be used for the first terminal device, the methods and/or steps implemented by the network device may alternatively be implemented by a component (for example, a chip or a circuit) that can be used for the network device, and the methods and/or steps implemented by the repeater may alternatively be implemented by a component (for example, a chip or a circuit) that can be used for the repeater.

The foregoing mainly describes the solutions provided in embodiments of this application from a perspective of interaction between devices. Correspondingly, an embodiment of this application further provides a communication apparatus, and the communication apparatus is configured to implement the foregoing methods. The communication apparatus may be the first terminal device in the foregoing method embodiments, or an apparatus including the first terminal device, or a component that can be used for the first terminal device. Alternatively, the communication apparatus may be the network device in the foregoing method embodiments, or an apparatus including the network device, or a component that can be used for the network device. Alternatively, the communication apparatus may be the repeater in the foregoing method embodiments, or an apparatus including the repeater, or a component that can be used for the repeater.

It may be understood that, to implement the foregoing functions, the communication apparatus includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division into functional modules may be performed on the communication apparatus based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely logical function division. During actual implementation, another division manner may be used.

For example, the communication apparatus is the network device in the foregoing method embodiments. FIG. 15 is a schematic diagram of a structure of a network device 150. The network device 150 includes a processing module 1501 and a transceiver module 1502. The transceiver module 1502 may also be referred to as a transceiver unit, and is configured to implement a sending and/or receiving function, for example, may be a transceiver circuit, a transceiver machine, a transceiver, or a communication interface.

Optionally, the network device may further include a storage module (not shown in FIG. 15), configured to store data and/or a computer program or instructions.

For example, the network device 150 may be a network device, or may be a chip used in the network device or another combined device or component that has a function of the foregoing network device. When the network device 150 is a network device, the transceiver module 1502 may be a transceiver, where the transceiver may include an antenna, a radio frequency circuit, and the like; and the processing module 1501 may be a processor (or a processing circuit), for example, a baseband processor, where the baseband processor may include one or more CPUs. When the network device 150 is a component that has a function of the foregoing network device, the transceiver module 1502 may be a radio frequency unit; and the processing module 1501 may be a processor (or a processing circuit), for example, a baseband processor. When the network device 150 is a chip system, the transceiver module 1502 may be an input/output interface of a chip (for example, a baseband chip); and the processing module 1501 may be a processor (or a processing circuit) of the chip system, and may include one or more central processing units. It should be understood that the transceiver module 1502 in this embodiment of this application may be implemented by a transceiver or a transceiver-related circuit component, and the processing module 1501 may be implemented by a processor or a processor-related circuit component (or referred to as a processing circuit).

For example, the transceiver module 1502 may be configured to perform all receiving and sending operations performed by the network device in the embodiments shown in FIG. 6 to FIG. 10, and/or configured to support another process of the technology described in this specification. The processing module 1501 may be configured to perform all operations other than the receiving and sending operations performed by the network device in the embodiments shown in FIG. 6 to FIG. 10, and/or configured to support another process of the technology described in this specification.

Specifically, the transceiver module 1502 is configured to send N first signals through a first beam, where the first signal is a broadcast signal or a reference signal. The transceiver module 1502 is further configured to receive first indication information from a first terminal device through a repeater, where the first indication information includes index information of X first signals fed back by the first terminal device, the index information of the X first signals corresponds to X second beams, the second beam is a beam of the repeater, N is a positive integer greater than 1, and X is a positive integer less than or equal to N. The transceiver module 1502 is further configured to communicate with the first terminal device through one of the X second beams.

Optionally, the transceiver module 1502 is further configured to send second indication information to the repeater, where the second indication information indicates the repeater to forward the first signal in a multi-beam forwarding manner.

Optionally, the transceiver module 1502 is further configured to receive third indication information from the repeater, where the third indication information indicates the first beam, and the first beam is a beam for communication between the network device and the repeater.

Optionally, the transceiver module 1502 is further configured to send fourth indication information to the repeater, where the fourth indication information indicates a quantity N of repetitions of the first beam; and that the transceiver module 1502 is configured to send N first signals through a first beam includes: The transceiver module 1502 is configured to send the N first signals for N times through the first beam.

Optionally, the transceiver module 1502 is further configured to receive a total quantity M of beams that are supported by the repeater and that are from the repeater, where M is a positive integer greater than or equal to X.

Optionally, that the transceiver module 1502 is further configured to communicate with the first terminal device through one of the X second beams includes: The transceiver module 1502 is further configured to communicate with the first terminal device within a time unit corresponding to the one of the X second beams through the second beam.

Optionally, the transceiver module 1502 is further configured to send fifth indication information to the repeater, where the fifth indication information indicates the one of the X second beams.

Optionally, the processing module 1501 is configured to determine a state of the repeater in one or more of the following manners, where the state of the repeater includes a working state or a non-working state: the processing module 1501 is configured to determine the state of the repeater based on planned working duration of the repeater; the processing module 1501 is configured to determine the state of the repeater based on random access initiated by the repeater; or the processing module 1501 is configured to determine the state of the repeater based on an uplink signal from the repeater.

Optionally, the transceiver module 1502 is further configured to receive request information from the repeater, where the request information requests to hand over to the non-working state.

All related content of the steps in the foregoing method embodiments may be cited in function descriptions of the corresponding functional modules. Details are not described herein again.

In this embodiment, the network device 150 is presented in a form of functional modules obtained through division in an integrated manner. The "module" herein may be a specific ASIC, a circuit, a processor that executes one or more software or firmware programs, a memory, an integrated logic circuit, and/or another component capable of providing the foregoing functions. In a simple embodiment, a person skilled in the art may figure out that the network device 150 may be in a form of the network device 30 shown in FIG. 5(a) to FIG. 5(c).

For example, the processor 301 in the network device 30 shown in FIG. 5(a) to FIG. 5(c) may invoke computer-executable instructions stored in the memory 302, so that the network device 30 performs the communication methods in the foregoing method embodiments.

Specifically, functions/implementation processes of the processing module 1501 and the transceiver module 1502 in FIG. 15 may be implemented by the processor 301 in the network device 30 shown in FIG. 5(a) to FIG. 5(c) by invoking the computer-executable instructions stored in the memory 302. Alternatively, functions/implementation processes of the processing module 1501 in FIG. 15 may be implemented by the processor 301 in the network device 30 shown in FIG. 5(a) to FIG. 5(c) by invoking the computer-executable instructions stored in the memory 302, and functions/implementation processes of the transceiver module 1502 in FIG. 15 may be implemented by the transceiver 303 in the network device 30 shown in FIG. 5(a) to FIG. 5(c).

Because the network device 150 provided in this embodiment may perform the foregoing communication methods, for a technical effect that can be achieved by the network device 150, refer to the foregoing method embodiments. Details are not described herein again.

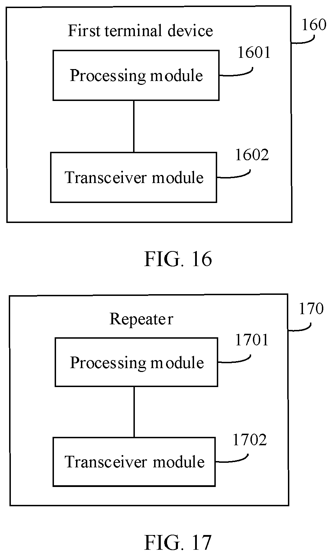

For example, the communication apparatus is the first terminal device in the foregoing method embodiments. FIG. 16 is a schematic diagram of a structure of a first terminal device 160. The first terminal device 160 includes a processing module 1601 and a transceiver module 1602. The transceiver module 1602 may also be referred to as a transceiver unit, and is configured to implement a sending and/or receiving function, for example, may be a transceiver circuit, a transceiver machine, a transceiver, or a communication interface.

Optionally, the first terminal device may further include a storage module (not shown in FIG. 16), configured to store data and/or a computer program or instructions.

For example, the first terminal device 160 may be a first terminal device, or may be a chip used in the first terminal device or another combined device or component that has a function of the foregoing first terminal device. When the first terminal device 160 is a first terminal device, the transceiver module 1602 may be a transceiver, where the transceiver may include an antenna, a radio frequency circuit, and the like; and the processing module 1601 may be a processor (or a processing circuit), for example, a baseband processor, where the baseband processor may include one or more CPUs. When the first terminal device 160 is a component that has a function of the foregoing first terminal device, the transceiver module 1602 may be a radio frequency unit; and the processing module 1601 may be a processor (or a processing circuit), for example, a baseband processor. When the first terminal device 160 is a chip system, the transceiver module 1602 may be an input/output interface of a chip (for example, a baseband chip); and the processing module 1601 may be a processor (or a processing circuit) of the chip system, and may include one or more central processing units. It should be understood that the transceiver module 1602 in this embodiment of this application may be implemented by a transceiver or a transceiver-related circuit component, and the processing module 1601 may be implemented by a processor or a processor-related circuit component (or referred to as a processing circuit).

For example, the transceiver module 1602 may be configured to perform all receiving and sending operations performed by the first terminal device in the embodiments shown in FIG. 6 to FIG. 10, and/or configured to support another process of the technology described in this specification. The processing module 1601 may be configured to perform all operations other than the receiving and sending operations performed by the first terminal device in the embodiments shown in FIG. 6 to FIG. 10, and/or configured to support another process of the technology described in this specification.

Specifically, the processing module 1601 is configured to measure quality of N first signals forwarded by a repeater from a network device, where the first signal is a broadcast signal or a reference signal. The transceiver module 1602 is configured to send first indication information to the network device through the repeater, where the first indication information includes index information of X first signals, the index information of the X first signals corresponds to X second beams, the second beam is a beam of the repeater, N is a positive integer greater than 1, and X is a positive integer less than or equal to N. The transceiver module 1602 is further configured to communicate with the network device through one of the X second beams.

Optionally, that the transceiver module 1602 is configured to communicate with the network device through one of the X second beams includes: The transceiver module 1602 is configured to communicate with the network device within a time unit corresponding to the one of the X second beams through the second beam.

Optionally, that the transceiver module 1602 is configured to send first indication information includes: The transceiver module 1602 is configured to send the first indication information to the network device when a difference between maximum quality and minimum quality in the quality of the N first signals is greater than or equal to a third threshold.

All related content of the steps in the foregoing method embodiments may be cited in function descriptions of the corresponding functional modules. Details are not described herein again.

In this embodiment, the first terminal device 160 is presented in a form of functional modules obtained through division in an integrated manner. The "module" herein may be a specific ASIC, a circuit, a processor that executes one or more software or firmware programs, a memory, an integrated logic circuit, and/or another component capable of providing the foregoing functions. In a simple embodiment, a person skilled in the art may figure out that the first terminal device 160 may be in a form of the first terminal device 40 shown in FIG. 5(a) to FIG. 5(c).

For example, the processor 401 in the first terminal device 40 shown in FIG. 5(a) to FIG. 5(c) may invoke computer-executable instructions stored in the memory 402, so that the first terminal device 40 performs the communication methods in the foregoing method embodiments.

Specifically, functions/implementation processes of the processing module 1601 and the transceiver module 1602 in FIG. 16 may be implemented by the processor 401 in the first terminal device 40 shown in FIG. 5(a) to FIG. 5(c) by invoking the computer-executable instructions stored in the memory 402. Alternatively, functions/implementation processes of the processing module 1601 in FIG. 16 may be implemented by the processor 401 in the first terminal device 40 shown in FIG. 5(a) to FIG. 5(c) by invoking the computer-executable instructions stored in the memory 402, and functions/implementation processes of the transceiver module 1602 in FIG. 16 may be implemented by the transceiver 403 in the first terminal device 40 shown in FIG. 5(a) to FIG. 5(c).

Because the first terminal device 160 provided in this embodiment may perform the foregoing communication methods, for a technical effect that can be achieved by the first terminal device 160, refer to the foregoing method embodiments. Details are not described herein again.

For example, the communication apparatus is the repeater in the foregoing method embodiments. FIG. 17 is a schematic diagram of a structure of a repeater 170. The repeater 170 includes a processing module 1701 and a transceiver module 1702. The transceiver module 1702 may also be referred to as a transceiver unit, and is configured to implement a sending and/or receiving function, for example, may be a transceiver circuit, a transceiver machine, a transceiver, or a communication interface.

Optionally, the repeater 170 may further include a storage module (not shown in FIG. 17), configured to store data and/or a computer program or instructions.

For example, the repeater 170 may be a repeater, or may be a chip used in the repeater or another combined device or component that has a function of the foregoing repeater. When the repeater 170 is a repeater, the transceiver module 1702 may be a transceiver, where the transceiver may include an antenna, a radio frequency circuit, and the like; and the processing module 1701 may be a processor (or a processing circuit), for example, a baseband processor, where the baseband processor may include one or more CPUs. When the repeater 170 is a component that has a function of the foregoing repeater, the transceiver module 1702 may be a radio frequency unit; and the processing module 1701 may be a processor (or a processing circuit), for example, a baseband processor. When the repeater 170 is a chip system, the transceiver module 1702 may be an input/output interface of a chip (for example, a baseband chip); and the processing module 1701 may be a processor (or a processing circuit) of the chip system, and may include one or more central processing units. It should be understood that the transceiver module 1702 in this embodiment of this application may be implemented by a transceiver or a transceiver-related circuit component, and the processing module 1701 may be implemented by a processor or a processor-related circuit component (or referred to as a processing circuit).

For example, the transceiver module 1702 may be configured to perform all receiving and sending operations performed by the repeater in the embodiments shown in FIG. 6 to FIG. 10, and/or configured to support another process of the technology described in this specification. The processing module 1701 may be configured to perform all operations other than the receiving and sending operations performed by the repeater in the embodiments shown in FIG. 6 to FIG. 10, and/or configured to support another process of the technology described in this specification.

Specifically, the transceiver module 1702 is configured to: receive N first signals from a network device, and forward the N first signals through K second beams. The transceiver module 1702 is further configured to relay communication between the network device and a first terminal device through one of X second beams, where the X second beams correspond to index information of X first signals fed back by the first terminal device, the first signal is a broadcast signal or a reference signal, N and K are positive integers greater than 1, and X is a positive integer less than or equal to N.

Optionally, the transceiver module 1702 is further configured to receive second indication information from the network device, where the second indication information indicates the repeater to forward the first signal in a multi-beam forwarding manner.

Optionally, the transceiver module 1702 is further configured to send third indication information to the network device by the repeater, where the third indication information indicates a first beam, and the first beam is a beam for communication between the network device and the repeater.

Optionally, the transceiver module 1702 is further configured to receive fourth indication information from the network device by the repeater, where the fourth indication information indicates a quantity N of repetitions of the first beam.

Optionally, the transceiver module 1702 is further configured to send one or more of the following items to the network device by the repeater: a total quantity M of beams supported by the repeater, a forwarding manner of the repeater, and controllable information of a beam of the repeater, where the forwarding manner of the repeater is multi-beam forwarding, and the controllable information of the beam of the repeater indicates whether the repeater supports adjustment of the beam of the repeater according to an indication of the network device.

Optionally, the transceiver module 1702 is further configured to receive fifth indication information from the network device by the repeater, where the fifth indication information indicates the one of the X second beams.

Optionally, the processing module 1701 is configured to feed back a state of the repeater to the network device in one or more of the following manners, where the state of the repeater includes a working state or a non-working state: the processing module 1701 is configured to send planned working duration of the repeater to the network device through the transceiver module 1702; the processing module 1701 is configured to initiate random access to the network device through the transceiver module 1702; or the processing module 1701 is configured to send an uplink signal to the network device through the transceiver module 1702.

Optionally, the transceiver module 1702 is further configured to send request information to the network device by the repeater, where the request information requests to hand over to the non-working state.

All related content of the steps in the foregoing method embodiments may be cited in function descriptions of the corresponding functional modules. Details are not described herein again.

In this embodiment, the repeater 170 is presented in a form of functional modules obtained through division in an integrated manner. The "module" herein may be a specific ASIC, a circuit, a processor that executes one or more software or firmware programs, a memory, an integrated logic circuit, and/or another component capable of providing the foregoing functions. In a simple embodiment, a person skilled in the art may figure out that the repeater 170 may be in a form of the repeater 20 shown in FIG. 5(a) to FIG. 5(c).

For example, the processor 201 in the repeater 20 shown in FIG. 5(a) to FIG. 5(c) may invoke computer-executable instructions stored in the memory 202, so that the repeater 20 performs the communication methods in the foregoing method embodiments.

Specifically, functions/implementation processes of the processing module 1701 and the transceiver module 1702 in FIG. 17 may be implemented by the processor 201 in the repeater 20 shown in FIG. 5(a) to FIG. 5(c) by invoking the computer-executable instructions stored in the memory 202. Alternatively, functions/implementation processes of the processing module 1701 in FIG. 17 may be implemented by the processor 201 in the repeater 20 shown in FIG. 5(a) to FIG. 5(c) by invoking the computer-executable instructions stored in the memory 202, and functions/implementation processes of the transceiver module 1702 in FIG. 17 may be implemented by the transceiver 203a and the transceiver 203b in the repeater 20 shown in FIG. 5(a) to FIG. 5(c). For example, communication between the transceiver module 1702 and the network device may be implemented by the transceiver 203a, and communication between the transceiver module 1702 and the first terminal device may be implemented by the transceiver 203b.

Because the repeater 170 provided in this embodiment may perform the foregoing communication methods, for a technical effect that can be achieved by the repeater 170, refer to the foregoing method embodiments. Details are not described herein again.

Optionally, an embodiment of this application further provides a communication apparatus (where for example, the communication apparatus may be a chip or a chip system). The communication apparatus includes a processor, configured to implement the method according to any one of the foregoing method embodiments. In a possible design, the communication apparatus further includes a memory. The memory is configured to store necessary program instructions and necessary data. The processor may invoke program code stored in the memory, to indicate the communication apparatus to perform the method in any one of the foregoing method embodiments. Certainly, the memory may not be in the communication apparatus. In another possible design, the communication apparatus further includes an interface circuit. The interface circuit is a code/data read/write interface circuit, and the interface circuit is configured to: receive computer-executable instructions (where the computer-executable instructions are stored in the memory, and may be directly read from the memory, or may be read through another component), and transmit the computer-executable instructions to the processor. When being a chip system, the communication apparatus may include a chip, or may include a chip and another discrete component. This is not specifically limited in this embodiment of this application.

Optionally, an embodiment of this application further provides a communication apparatus. The communication apparatus may include a processor and an interface circuit. The interface circuit is configured to communicate with a module other than the communication apparatus. The processor may be configured to execute a computer program or instructions, so that the communication apparatus implements the method in any one of the foregoing method embodiments. In some scenarios, the communication apparatus may be a chip or a chip system.

All or some of the foregoing embodiments may be implemented by software, hardware, firmware, or any combination thereof. When a software program is used to implement embodiments, the embodiments may be implemented completely or partially in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. In embodiments of this application, the computer may include the apparatus described above.

Although this application is described with reference to the embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and the embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the claims of this application and their equivalent technologies.

## Claims

1. A communication method, wherein the method comprises:
sending, by a network device, N first signals through a first beam, wherein the first signal is a broadcast signal or a reference signal;
receiving, by the network device, first indication information from a first terminal device through a repeater, wherein the first indication information comprises index information of X first signals fed back by the first terminal device, the index information of the X first signals corresponds to X second beams, the second beam is a beam of the repeater, N is a positive integer greater than 1, and X is a positive integer less than or equal to N; and
communicating, by the network device, with the first terminal device through one of the X second beams.

2. The method according to claim 1, wherein the method further comprises:
sending, by the network device, second indication information to the repeater, wherein the second indication information indicates the repeater to forward the first signal in a multi-beam forwarding manner.

3. The method according to claim 1 or 2, wherein the method further comprises:
receiving, by the network device, third indication information from the repeater, wherein the third indication information indicates the first beam, and the first beam is a beam for communication between the network device and the repeater.

4. The method according to any one of claims 1 to 3, wherein the method further comprises:
sending, by the network device, fourth indication information to the repeater, wherein the fourth indication information indicates a quantity N of repetitions of the first beam; and
the sending, by a network device, N first signals through a first beam comprises:
sending, by the network device, the N first signals for N times through the first beam.

5. The method according to claim 4, wherein when the first signal is a broadcast signal,
the N first signals belong to a first signal group, and the fourth indication information comprises a quantity of repetitions of a beam corresponding to the first signal group;
the fourth indication information comprises the quantity N of repetitions of the first beam; or
the fourth indication information comprises a quantity (N-Y) of repetitions of the first beam, and Y is a quantity of times that the first signal has been sent.

6. The method according to any one of claims 1 to 5, wherein the method further comprises:
receiving, by the network device, a total quantity M of beams that are supported by the repeater and that are from the repeater, wherein M is a positive integer greater than or equal to X.

7. The method according to any one of claims 1 to 6, wherein the communicating, by the network device, with the first terminal device through one of the X second beams comprises:
communicating, by the network device, with the first terminal device within a time unit corresponding to the one of the X second beams through the second beam.

8. The method according to any one of claims 1 to 6, wherein the method further comprises:
sending, by the network device, fifth indication information to the repeater, wherein the fifth indication information indicates the one of the X second beams.

9. The method according to any one of claims 1 to 8, wherein the method further comprises: determining, by the network device, a state of the repeater in one or more of the following manners, wherein the state of the repeater comprises a working state or a non-working state:
determining, by the network device, the state of the repeater based on planned working duration of the repeater;
determining, by the network device, the state of the repeater based on random access initiated by the repeater; or
determining, by the network device, the state of the repeater based on an uplink signal from the repeater.

10. The method according to any one of claims 1 to 9, wherein the method further comprises:
receiving, by the network device, request information from the repeater, wherein the request information requests to hand over to the non-working state.

11. The method according to any one of claims 1 to 10, wherein the X first signals fed back by the first terminal device comprise:
X first signals with best quality in the N first signals;
X first signals, in the N first signals, whose quality is greater than or equal to a first threshold; or
X first signals, in the N first signals, whose quality is greater than or equal to average quality of the N first signals.

12. The method according to claim 11, wherein X is greater than or equal to 2; and after the X first signals are sorted by quality, a quality difference between at least two adjacent first signals is greater than or equal to a second threshold.

13. A communication method, wherein the method comprises:
measuring, by a first terminal device, quality of N first signals forwarded by a repeater from a network device, wherein the first signal is a broadcast signal or a reference signal;
sending, by the first terminal device, first indication information to the network device through the repeater, wherein the first indication information comprises index information of X first signals, the index information of the X first signals corresponds to X second beams, the second beam is a beam of the repeater, N is a positive integer greater than 1, and X is a positive integer less than or equal to N; and
communicating, by the first terminal device, with the network device through one of the X second beams.

14. The method according to claim 13, wherein the communicating, by the first terminal device, with the network device through one of the X second beams comprises:
communicating, by the first terminal device, with the network device within a time unit corresponding to the one of the X second beams through the second beam.

15. The method according to claim 13 or 14, wherein the X first signals comprise:
X first signals with best quality in the N first signals;
X first signals, in the N first signals, whose quality is greater than or equal to a first threshold; or
X first signals, in the N first signals, whose quality is greater than or equal to average quality of the N first signals.

16. The method according to claim 15, wherein X is greater than or equal to 2; and after the X first signals are sorted by quality, a quality difference between at least two adjacent first signals is greater than or equal to a second threshold.

17. The method according to any one of claims 13 to 16, wherein the sending, by the first terminal device, first indication information comprises:
sending, by the first terminal device, the first indication information to the network device when a difference between maximum quality and minimum quality in the quality of the N first signals is greater than or equal to a third threshold.

18. A communication method, wherein the method comprises:
receiving, by a repeater, N first signals from a network device, and forwarding the N first signals through K second beams, wherein the first signal is a broadcast signal or a reference signal, and N and K are positive integers greater than 1; and
relaying, by the repeater, communication between the network device and a first terminal device through one of X second beams, wherein the X second beams correspond to index information of X first signals fed back by the first terminal device, and X is a positive integer less than or equal to N.

19. The method according to claim 18, wherein the method further comprises:
receiving, by the repeater, second indication information from the network device, wherein the second indication information indicates the repeater to forward the first signal in a multi-beam forwarding manner.

20. The method according to claim 18 or 19, wherein the method further comprises:
sending, by the repeater, third indication information to the network device, wherein the third indication information indicates a first beam, and the first beam is a beam for communication between the network device and the repeater.

21. The method according to claim 20, wherein the method further comprises:
receiving, by the repeater, fourth indication information from the network device, wherein the fourth indication information indicates a quantity N of repetitions of the first beam.

22. The method according to claim 21, wherein when the first signal is a broadcast signal,
the N first signals belong to a first signal group, and the fourth indication information comprises a quantity of repetitions of a beam corresponding to the first signal group;
the fourth indication information comprises the quantity N of repetitions of the first beam; or
the fourth indication information comprises a quantity (N-Y) of repetitions of the first beam, and Y is a quantity of times that the first signal has been sent.

23. The method according to any one of claims 18 to 22, wherein the method further comprises:
sending, by the repeater, one or more of the following items to the network device: a total quantity M of beams supported by the repeater, a forwarding manner of the repeater, and controllable information of a beam of the repeater, wherein the forwarding manner of the repeater is multi-beam forwarding, and the controllable information of the beam of the repeater indicates whether the repeater supports adjustment of the beam of the repeater according to an indication of the network device.

24. The method according to any one of claims 18 to 23, wherein the method further comprises:
receiving, by the repeater, fifth indication information from the network device, wherein the fifth indication information indicates the one of the X second beams.

25. The method according to any one of claims 18 to 24, wherein the method further comprises:
feeding back, by the repeater, a state of the repeater to the network device in one or more of the following manners, wherein the state of the repeater comprises a working state or a non-working state:
sending, by the repeater, planned working duration of the repeater to the network device;
initiating, by the repeater, random access to the network device; or
sending, by the repeater, an uplink signal to the network device.

26. The method according to any one of claims 18 to 25, wherein the method further comprises:
sending, by the repeater, request information to the network device, wherein the request information requests to hand over to the non-working state.

27. A network device, wherein the network device comprises a transceiver module, wherein
the transceiver module is configured to send N first signals through a first beam, wherein the first signal is a broadcast signal or a reference signal;
the transceiver module is further configured to receive first indication information from a first terminal device through a repeater, wherein the first indication information comprises index information of X first signals fed back by the first terminal device, the index information of the X first signals corresponds to X second beams, the second beam is a beam of the repeater, N is a positive integer greater than 1, and X is a positive integer less than or equal to N; and
the transceiver module is further configured to communicate with the first terminal device through one of the X second beams.

28. The network device according to claim 27, wherein
the transceiver module is further configured to send second indication information to the repeater, wherein the second indication information indicates the repeater to forward the first signal in a multi-beam forwarding manner.

29. The network device according to claim 27 or 28, wherein
the transceiver module is further configured to receive third indication information from the repeater, wherein the third indication information indicates the first beam, and the first beam is a beam for communication between the network device and the repeater.

30. The network device according to any one of claims 27 to 29, wherein
the transceiver module is further configured to send fourth indication information to the repeater, wherein the fourth indication information indicates a quantity N of repetitions of the first beam; and
that the transceiver module is configured to send N first signals through a first beam comprises:
the transceiver module is configured to send the N first signals for N times through the first beam.

31. The network device according to claim 30, wherein
the N first signals belong to a first signal group, and the fourth indication information comprises a quantity of repetitions of a beam corresponding to the first signal group;
the fourth indication information comprises the quantity N of repetitions of the first beam; or
the fourth indication information comprises a quantity (N-Y) of repetitions of the first beam, and Y is a quantity of times that the first signal has been sent.

32. The network device according to any one of claims 27 to 31, wherein
the transceiver module is further configured to receive a total quantity M of beams that are supported by the repeater and that are from the repeater, wherein M is a positive integer greater than or equal to X.

33. The network device according to any one of claims 27 to 32, wherein that the transceiver module further communicates with the first terminal device through one of the X second beams comprises:
the transceiver module is further configured to communicate with the first terminal device within a time unit corresponding to the one of the X second beams through the second beam.

34. The network device according to any one of claims 27 to 33, wherein
the transceiver module is further configured to send fifth indication information to the repeater, wherein the fifth indication information indicates the one of the X second beams.

35. The network device according to any one of claims 27 to 34, wherein the network device further comprises a processing module, wherein
the processing module is configured to determine a state of the repeater in one or more of the following manners, wherein the state of the repeater comprises a working state or a non-working state:
the processing module is configured to determine the state of the repeater based on planned working duration of the repeater;
the processing module is configured to determine the state of the repeater based on random access initiated by the repeater; or
the processing module is configured to determine the state of the repeater based on an uplink signal from the repeater.

36. The network device according to any one of claims 27 to 35, wherein
the transceiver module is further configured to receive request information from the repeater, wherein the request information requests to hand over to the non-working state.

37. The network device according to any one of claims 27 to 36, wherein the X first signals fed back by the first terminal device comprise:
X first signals with best quality in the N first signals;
X first signals, in the N first signals, whose quality is greater than or equal to a first threshold; or
X first signals, in the N first signals, whose quality is greater than or equal to average quality of the N first signals.

38. The network device according to claim 37, wherein X is greater than or equal to 2; and after the X first signals are sorted by quality, a quality difference between at least two adjacent first signals is greater than or equal to a second threshold.

39. A first terminal device, wherein the first terminal device comprises a processing module and a transceiver module, wherein
the processing module is configured to measure quality of N first signals forwarded by a repeater from a network device, wherein the first signal is a broadcast signal or a reference signal;
the transceiver module is configured to send first indication information to the network device through the repeater, wherein the first indication information comprises index information of X first signals, the index information of the X first signals corresponds to X second beams, the second beam is a beam of the repeater, N is a positive integer greater than 1, and X is a positive integer less than or equal to N; and
the transceiver module is further configured to communicate with the network device through one of the X second beams.

40. The first terminal device according to claim 39, wherein that the transceiver module is configured to communicate with the network device through one of the X second beams comprises:
the transceiver module is configured to communicate with the network device within a time unit corresponding to the one of the X second beams through the second beam.

41. The first terminal device according to claim 39 or 40, wherein the X first signals comprise:
X first signals with best quality in the N first signals;
X first signals, in the N first signals, whose quality is greater than or equal to a first threshold; or
X first signals, in the N first signals, whose quality is greater than or equal to average quality of the N first signals.

42. The first terminal device according to claim 41, wherein X is greater than or equal to 2; and after the X first signals are sorted by quality, a quality difference between at least two adjacent first signals is greater than or equal to a second threshold.

43. The first terminal device according to any one of claims 39 to 42, wherein that the transceiver module is configured to send first indication information comprises:
the transceiver module is configured to send the first indication information to the network device when a difference between maximum quality and minimum quality in the quality of the N first signals is greater than or equal to a third threshold.

44. A repeater, wherein the repeater comprises a transceiver module, wherein
the transceiver module is configured to: receive N first signals from a network device, and forward the N first signals through K second beams, wherein the first signal is a broadcast signal or a reference signal, and N and K are positive integers greater than 1; and
the transceiver module is further configured to relay communication between the network device and a first terminal device through one of X second beams, wherein the X second beams correspond to index information of X first signals fed back by the first terminal device, and X is a positive integer less than or equal to N.

45. The repeater according to claim 44, wherein
the transceiver module is further configured to receive second indication information from the network device, wherein the second indication information indicates the repeater to forward the first signal in a multi-beam forwarding manner.

46. The repeater according to claim 44 or 45, wherein
the transceiver module is further configured to send third indication information to the network device, wherein the third indication information indicates a first beam, and the first beam is a beam for communication between the network device and the repeater.

47. The repeater according to claim 46, wherein
the transceiver module is further configured to receive fourth indication information from the network device, wherein the fourth indication information indicates a quantity N of repetitions of the first beam.

48. The repeater according to claim 47, wherein when the first signal is a broadcast signal,
the N first signals belong to a first signal group, and the fourth indication information comprises a quantity of repetitions of a beam corresponding to the first signal group;
the fourth indication information comprises the quantity N of repetitions of the first beam; or
the fourth indication information comprises a quantity (N-Y) of repetitions of the first beam, and Y is a quantity of times that the first signal has been sent.

49. The repeater according to any one of claims 44 to 48, wherein
the transceiver module is further configured to send one or more of the following items to the network device: a total quantity M of beams supported by the repeater, a forwarding manner of the repeater, and controllable information of a beam of the repeater, wherein the forwarding manner of the repeater is multi-beam forwarding, and the controllable information of the beam of the repeater indicates whether the repeater supports adjustment of the beam of the repeater according to an indication of the network device.

50. The repeater according to any one of claims 44 to 49, wherein
the transceiver module is further configured to receive fifth indication information from the network device, wherein the fifth indication information indicates the one of the X second beams.

51. The repeater according to any one of claims 44 to 50, wherein the repeater further comprises a processing module, wherein
the processing module is configured to feed back a state of the repeater to the network device in one or more of the following manners, wherein the state of the repeater comprises a working state or a non-working state:
sending planned working duration of the repeater to the network device;
initiating random access to the network device; or
sending an uplink signal to the network device.

52. The repeater according to any one of claims 44 to 51, wherein
the transceiver module is further configured to send request information to the network device, wherein the request information requests to hand over to the non-working state.

53. A communication apparatus, wherein the communication apparatus comprises a processor, wherein
the processor is configured to execute computer-executable instructions stored in a memory, so that the communication apparatus is enabled to perform the method according to any one of claims 1 to 12, or the communication apparatus is enabled to perform the method according to any one of claims 13 to 17, or the communication apparatus is enabled to perform the method according to any one of claims 18 to 26.

54. A communication apparatus, wherein the communication apparatus comprises a processor and an interface circuit, wherein
the interface circuit is configured to communicate with a module other than the communication apparatus; and
the processor is configured to execute a computer program or instructions, so that the communication apparatus is enabled to perform the method according to any one of claims 1 to 12, or the communication apparatus is enabled to perform the method according to any one of claims 13 to 17, or the communication apparatus is enabled to perform the method according to any one of claims 18 to 26.

55. A computer-readable storage medium, comprising a computer program or instructions, wherein when the computer program or instructions are run on a communication apparatus, the communication apparatus is enabled to perform the method according to any one of claims 1 to 12, or the communication apparatus is enabled to perform the method according to any one of claims 13 to 17, or the communication apparatus is enabled to perform the method according to any one of claims 18 to 26.

56. A computer program product, wherein when the computer program product runs on a communication apparatus, the communication apparatus is enabled to perform the method according to any one of claims 1 to 12, or the communication apparatus is enabled to perform the method according to any one of claims 13 to 17, or the communication apparatus is enabled to perform the method according to any one of claims 18 to 26.

57. A computer program, wherein when the computer program is run on a communication apparatus, the method according to any one of claims 1 to 12 is performed, or the method according to any one of claims 13 to 17 is performed, or the method according to any one of claims 18 to 26 is performed.

58. A communication system, wherein the communication system comprises the network device according to any one of claims 27 to 38, the first terminal device according to any one of claims 39 to 43, and the repeater according to any one of claims 44 to 52.
